# EUROPEAN PATENT APPLICATION

(11) **EP 4 804 664 A1**
(43) Date of publication of application: **09.09.2026**
(21) Application number: 24899756.1
(22) Date of filing: 30.11.2024
(51) Int. Cl.: H04W 64/00

(54) **COMMUNICATION METHOD AND RELATED APPARATUS**

(30) Priority: 05.12.2023 CN 202311666439
(71) Applicant: Huawei Technologies Co., Ltd., Shenzhen, Guangdong 518129 (CN)
(72) Inventor: LI, Guanglei, Shenzhen, Guangdong 518129 (CN); LIAO, Ting, Shenzhen, Guangdong 518129 (CN); ZONG, Zaifeng, Shenzhen, Guangdong 518129 (CN)
(74) Representative: Pfenning, Meinig & Partner mbB
(86) International application number: PCT/CN2024/135978
(87) International publication number: WO 2025/119116

(57) **Abstract**

A communication method and a related apparatus are provided. The method includes: determining a location of a terminal device based on uplink positioning information of the terminal device from an access network device corresponding to positioning satellites when at least two satellites among the positioning satellites of the terminal device have different orbits; and determining the location of the terminal device based on information about a neighboring cell of a serving cell of the terminal device and the uplink positioning information of the terminal device from the access network device corresponding to the positioning satellites when all satellites in the positioning satellites have a same orbit, where the positioning satellites include a serving satellite and at least one neighboring positioning satellite of the terminal device, and the neighboring positioning satellite is a neighboring satellite of the serving satellite. According to this application, positioning efficiency can be improved, and positioning accuracy can be further improved.

## Description

This application claims priority to Chinese Patent Application No. 202311666439.3, filed with the China National Intellectual Property Administration on December 5, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

With the development of satellite communication technologies, a terminal device may access a network via a satellite (for example, access an access network device via a satellite). Currently, the 3rd generation partnership project (3rd generation partnership project, 3GPP) supports a positioning approach based on the movement of a satellite, in which multiple round trip time (round trip time, RTT) measurements are performed, to obtain a location of the terminal device. However, such a positioning method takes long time and has low efficiency.

### SUMMARY

This application provides a communication method and a related apparatus, to help improve positioning efficiency.

According to a first aspect, this application provides a communication method. Optionally, the method may be performed by a location management function, or may be a component or an apparatus (for example, a processor, a chip, or a chip system) used in the location management function, or a logical module or software that can implement all or some functions of the location management function. The method includes:
receiving uplink positioning information of a terminal device from an access network device corresponding to positioning satellites of the terminal device, where the positioning satellites include a serving satellite and at least one neighboring positioning satellite of the terminal device, and the neighboring positioning satellite is a neighboring satellite of the serving satellite; and
determining a location of the terminal device based on the uplink positioning information of the terminal device.

In this application, the terminal device is positioned based on a plurality of satellites, to help improve positioning efficiency. Specifically, access network devices corresponding to a plurality of positioning satellites including the serving satellite and the at least one neighboring positioning satellite of the terminal device may simultaneously send the uplink positioning information of the terminal device to the location management function, so that the location management function determines the location of the terminal device based on the uplink positioning information of the terminal device.

In a possible implementation, the method further includes:
receiving information about the access network device corresponding to the at least one neighboring positioning satellite from a serving access network device corresponding to the serving satellite or from an access and mobility management function; and
sending, based on the information about the access network device corresponding to the at least one neighboring positioning satellite, a first message to the access network device corresponding to the at least one neighboring positioning satellite and the serving access network device, where the first message is used to trigger obtaining of the uplink positioning information of the terminal device.

In this implementation, the serving access network device or the access and mobility management function may select a neighboring positioning satellite that participates in positioning of the terminal device, and send, to the location management function, information about an access network device corresponding to the determined neighboring positioning satellite, so that the location management function may subsequently request to obtain the uplink positioning information of the terminal device from a plurality of access network devices including the access network device corresponding to the neighboring positioning satellite. The serving access network device or the access and mobility management function selects the neighboring positioning satellite for positioning in this implementation solution, to help reduce computing complexity of the location management function.

In a possible implementation, the method further includes:
receiving capability information from the terminal device, where the capability information indicates whether the terminal device supports positioning based on a plurality of satellites.

In this implementation, the terminal device may further report the capability information of the terminal device to the location management function, to indicate whether the terminal device supports positioning based on the plurality of satellites. This helps the location management function position the terminal device based on the plurality of satellites when determining that the terminal device supports positioning based on the plurality of satellites.

In a possible implementation, the determining the location of the terminal device based on the uplink positioning information of the terminal device includes:
when the terminal device supports positioning based on the plurality of satellites, determining the location of the terminal device based on the uplink positioning information of the terminal device.

In a possible implementation, at least two satellites among the positioning satellites have different orbits.

In this implementation, the terminal device is positioned based on a plurality of satellites with different orbits, to help improve positioning accuracy.

In a possible implementation, all satellites in the positioning satellites have a same orbit.

In a possible implementation, the determining the location of the terminal device based on the uplink positioning information of the terminal device includes:
determining the location of the terminal device based on information about a neighboring cell of a serving cell of the terminal device and the uplink positioning information of the terminal device.

In this implementation, when all satellites in the positioning satellites have a same orbit, to avoid a mirror problem in positioning of the terminal device, the location management function may determine the location of the terminal device based on the information about the neighboring cell of the serving cell of the terminal device and the uplink positioning information of the terminal device. This can improve positioning accuracy.

In a possible implementation, the method further includes:
when the terminal device does not support positioning based on the plurality of satellites, determining the location of the terminal device based on the information about the neighboring cell of the serving cell of the terminal device and the uplink positioning information of the terminal device from the serving access network device corresponding to the serving satellite.

In this implementation, when the terminal device does not support positioning based on the plurality of satellites, the location management function may determine the location of the terminal device based on the uplink positioning information, of the terminal device, reported by a serving access network device corresponding to a single satellite (usually the serving satellite) and the information about the neighboring cell. This helps improve positioning accuracy of the terminal device during positioning based on the single satellite.

In a possible implementation, the method further includes:
obtaining the information about the neighboring cell when determining, based on ephemeris information and beam information of the satellite, that a mirror problem exists in positioning of the terminal device; or
receiving first indication information from the serving access network device corresponding to the serving satellite, and obtaining the information about the neighboring cell based on the first indication information, where the first indication information indicates that a mirror problem exists in positioning of the terminal device.

In this implementation, when the mirror problem exists in positioning of the terminal device, positioning is performed based on the information about the neighboring cell, to help improve positioning accuracy of the terminal device.

In a possible implementation, the obtaining the information about the neighboring cell includes:
requesting the information about the neighboring cell from the serving access network device, and receiving the information about the neighboring cell from the serving access network device; or
requesting the information about the neighboring cell from the terminal device, and receiving the information about the neighboring cell from the terminal device.

In this implementation, the serving access network device or the terminal device may feed back the information about the neighboring cell to the location management function based on a request sent by the location management function. This request-response implementation is simple and has high applicability.

In a possible implementation, the method further includes:
receiving the information about the neighboring cell from the serving access network device corresponding to the serving satellite; or
receiving the information about the neighboring cell from the terminal device.

In this implementation, alternatively, the serving access network device or the terminal device may actively send the information about the neighboring cell to the location management function. This is highly operable.

In a possible implementation, the information about the neighboring cell includes one or more of the following information:
an identifier of the neighboring cell, information about a reference signal of the neighboring cell, or information about a beam of the neighboring cell.

According to a second aspect, this application provides a communication method. Optionally, the method may be performed by a location management function, or may be a component or an apparatus (for example, a processor, a chip, or a chip system) used in the location management function, or a logical module or software that can implement all or some functions of the location management function. The method includes:
determining a location of a terminal device based on uplink positioning information of the terminal device from an access network device corresponding to positioning satellites when at least two satellites among the positioning satellites of the terminal device have different orbits; and/or
determining the location of the terminal device based on information about a neighboring cell of a serving cell of the terminal device and the uplink positioning information of the terminal device from the access network device corresponding to the positioning satellites when all satellites in the positioning satellites have a same orbit.

The positioning satellites include a serving satellite and at least one neighboring positioning satellite of the terminal device, and the neighboring positioning satellite is a neighboring satellite of the serving satellite.

In this application, the location management function may determine a plurality of satellites for positioning the terminal device, and implement positioning based on the plurality of satellites, to improve positioning efficiency of the terminal device. Specifically, when at least two satellites among the positioning satellites of the terminal device have different orbits, the location management function may determine the location of the terminal device based on the uplink positioning information of the terminal device from the access network device corresponding to the positioning satellites. This can improve positioning efficiency, and help improve positioning accuracy. When all satellites in the positioning satellites have a same orbit, the location management function may determine the location of the terminal device based on the information about the neighboring cell of the serving cell of the terminal device and the uplink positioning information of the terminal device from the access network device corresponding to the positioning satellites. This can improve positioning efficiency, and help improve positioning accuracy.

In a possible implementation, the method further includes:
receiving capability information from the terminal device, where the capability information indicates whether the terminal device supports positioning based on a plurality of satellites.

In a possible implementation, the determining the location of the terminal device based on the uplink positioning information of the terminal device from the access network device corresponding to the positioning satellites when at least two satellites among the positioning satellites of the terminal device have different orbits includes:
determining the location of the terminal device based on the uplink positioning information of the terminal device from the access network device corresponding to the positioning satellites when at least two satellites among the positioning satellites of the terminal device have different orbits and the terminal device supports positioning based on the plurality of satellites.

In a possible implementation, the determining the location of the terminal device based on the uplink positioning information of the terminal device from the access network device corresponding to the positioning satellites includes:
determining the location of the terminal device based on the uplink positioning information of the terminal device and downlink positioning information of the terminal device.

In this implementation, the location management function may specifically determine the location of the terminal device based on the uplink positioning information of the terminal device and the downlink positioning information of the terminal device. This helps improve positioning accuracy.

In a possible implementation, the method further includes:
when the terminal device does not support positioning based on the plurality of satellites, determining the location of the terminal device based on the information about the neighboring cell of the serving cell of the terminal device and the uplink positioning information of the terminal device from the serving access network device corresponding to the serving satellite.

In this implementation, when the terminal device does not support positioning based on the plurality of satellites, the location management function may determine the location of the terminal device based on the uplink positioning information, of the terminal device, reported by a serving access network device corresponding to a single satellite (usually the serving satellite) and the information about the neighboring cell. This helps improve positioning accuracy of the terminal device during positioning based on the single satellite.

In a possible implementation, the method further includes:
determining the positioning satellites of the terminal device based on first information, where the first information includes ephemeris information and/or coverage information of the satellite.

In this implementation, the location management function may specifically determine the at least one neighboring positioning satellite of the terminal device based on the ephemeris information and/or the coverage information of the satellite. This is highly operable.

In a possible implementation, the method further includes:
receiving the uplink positioning information of the terminal device from the access network device corresponding to the positioning satellites.

In a possible implementation, the method further includes:
sending a second message to the access network device corresponding to the positioning satellites, where the second message is used to trigger obtaining of the uplink positioning information of the terminal device.

In this implementation, the location management function may trigger obtaining of the uplink positioning information of the terminal device in a request-response implementation. This is easy to implement, and facilitates forward compatibility of a protocol.

In a possible implementation, the method further includes:
obtaining the information about the neighboring cell when determining, based on the ephemeris information and beam information of the satellite, that a mirror problem exists in positioning of the terminal device; or
receiving first indication information from the serving access network device corresponding to the serving satellite, and obtaining the information about the neighboring cell based on the first indication information, where the first indication information indicates that a mirror problem exists in positioning of the terminal device.

In a possible implementation, the obtaining the information about the neighboring cell includes:
requesting the information about the neighboring cell from the serving access network device, and receiving the information about the neighboring cell from the serving access network device; or
requesting the information about the neighboring cell from the terminal device, and receiving the information about the neighboring cell from the terminal device.

In a possible implementation, the method further includes:
receiving the information about the neighboring cell from the serving access network device corresponding to the serving satellite; or
receiving the information about the neighboring cell from the terminal device.

In a possible implementation, the information about the neighboring cell includes one or more of the following information:
an identifier of the neighboring cell, information about a reference signal of the neighboring cell, or information about a beam of the neighboring cell.

According to a third aspect, this application provides a communication method. Optionally, the method may be performed by a first network device (for example, the first network device may be a serving access network device or an access and mobility management function), or may be a component or an apparatus (for example, a processor, a chip, or a chip system) used in the first network device, or a logical module or software that can implement all or some functions of the first network device. The method includes:
obtaining information about an access network device corresponding to at least one neighboring positioning satellite of a terminal device, where the neighboring positioning satellite is a neighboring satellite of a serving satellite of the terminal device; and
sending, to a location management function, the information about the access network device corresponding to the at least one neighboring positioning satellite.

In a possible implementation, the method further includes:
determining the positioning satellites of the terminal device based on first information, where the first information includes ephemeris information and/or coverage information of the satellite.

In a possible implementation, at least two satellites in the at least one neighboring positioning satellite and the serving satellite of the terminal device have different orbits.

In a possible implementation, all satellites in the at least one neighboring positioning satellite and the serving satellite have a same orbit.

In a possible implementation, the first network device is a serving access network device corresponding to the serving satellite, and the method further includes:
when determining, based on the ephemeris information and beam information of the satellite, that a mirror problem exists in positioning of the terminal device, sending information about a neighboring cell of a serving cell of the terminal device or first indication information to the location management function, where the first indication information indicates that the mirror problem exists in positioning of the terminal device.

In a possible implementation, the first network device is the serving access network device corresponding to the serving satellite, and the method further includes:
receiving, from the location management function, a request message for requesting information about the neighboring cell; and
sending the information about the neighboring cell of the serving cell of the terminal device to the location management function based on the request message.

In a possible implementation, the information about the neighboring cell includes one or more of the following information:
an identifier of the neighboring cell, information about a reference signal of the neighboring cell, or information about a beam of the neighboring cell.

In a possible implementation, the first network device is the serving access network device corresponding to the serving satellite, and the method further includes:
receiving a first message from the location management function, where the first message is used to trigger obtaining of uplink positioning information of the terminal device;
obtaining the uplink positioning information of the terminal device based on the first message; and
sending the uplink positioning information of the terminal device to the location management function.

According to a fourth aspect, this application provides a communication apparatus. The communication apparatus may be a location management function, or may be a module in the location management function. The communication apparatus includes:
a transceiver unit, configured to receive uplink positioning information of a terminal device from an access network device corresponding to positioning satellites of the terminal device, where the positioning satellites include a serving satellite and at least one neighboring positioning satellite of the terminal device, and the neighboring positioning satellite is a neighboring satellite of the serving satellite; and
a processing unit, configured to determine a location of the terminal device based on the uplink positioning information of the terminal device.

In a possible implementation, the transceiver unit is configured to:
receive information about the access network device corresponding to the at least one neighboring positioning satellite from a serving access network device corresponding to the serving satellite or from an access and mobility management function; and
send, based on the information about the access network device corresponding to the at least one neighboring positioning satellite, a first message to the access network device corresponding to the at least one neighboring positioning satellite and the serving access network device, where the first message is used to trigger obtaining of the uplink positioning information of the terminal device.

In a possible implementation, the transceiver unit is configured to:
receive capability information from the terminal device, where the capability information indicates whether the terminal device supports positioning based on a plurality of satellites.

In a possible implementation, the processing unit is configured to:
when the terminal device supports positioning based on the plurality of satellites, determine the location of the terminal device based on the uplink positioning information of the terminal device.

In a possible implementation, at least two satellites among the positioning satellites have different orbits.

In a possible implementation, all satellites in the positioning satellites have a same orbit.

In a possible implementation, the processing unit is configured to:
determine the location of the terminal device based on information about a neighboring cell of a serving cell of the terminal device and the uplink positioning information of the terminal device.

In a possible implementation, the processing unit is configured to:
when the terminal device does not support positioning based on the plurality of satellites, determine the location of the terminal device based on the information about the neighboring cell of the serving cell of the terminal device and the uplink positioning information of the terminal device from the serving access network device corresponding to the serving satellite.

In a possible implementation, the transceiver unit is configured to:
obtain the information about the neighboring cell when determining, based on the ephemeris information and beam information of the satellite, that a mirror problem exists in positioning of the terminal device; or
receive first indication information from the serving access network device corresponding to the serving satellite, and obtain the information about the neighboring cell based on the first indication information, where the first indication information indicates that a mirror problem exists in positioning of the terminal device.

In a possible implementation, the transceiver unit is configured to:
request the information about the neighboring cell from the serving access network device, and receive the information about the neighboring cell from the serving access network device; or
request the information about the neighboring cell from the terminal device, and receive the information about the neighboring cell from the terminal device.

In a possible implementation, the transceiver unit is configured to:
receive the information about the neighboring cell from the serving access network device corresponding to the serving satellite; or
receive the information about the neighboring cell from the terminal device.

In a possible implementation, the information about the neighboring cell includes one or more of the following information:
an identifier of the neighboring cell, information about a reference signal of the neighboring cell, or information about a beam of the neighboring cell.

According to a fifth aspect, this application provides a communication apparatus. The communication apparatus may be a location management function, or may be a module in the location management function. The communication apparatus includes:
a processing unit, configured to: determine a location of a terminal device based on uplink positioning information of the terminal device from an access network device corresponding to positioning satellites when at least two satellites among the positioning satellites of the terminal device have different orbits; and/or
determine the location of the terminal device based on information about a neighboring cell of a serving cell of the terminal device and the uplink positioning information of the terminal device from the access network device corresponding to the positioning satellites when all satellites in the positioning satellites have a same orbit.

The positioning satellites include a serving satellite and at least one neighboring positioning satellite of the terminal device, and the neighboring positioning satellite is a neighboring satellite of the serving satellite.

In a possible implementation, the communication apparatus further includes a transceiver unit, and the transceiver unit is configured to:
receive capability information from the terminal device, where the capability information indicates whether the terminal device supports positioning based on a plurality of satellites.

In a possible implementation, the processing unit is configured to:
determine the location of the terminal device based on the uplink positioning information of the terminal device from the access network device corresponding to the positioning satellites when at least two satellites among the positioning satellites of the terminal device have different orbits and the terminal device supports positioning based on the plurality of satellites.

In a possible implementation, the processing unit is configured to:
determine the location of the terminal device based on the uplink positioning information of the terminal device and downlink positioning information of the terminal device.

In a possible implementation, the processing unit is configured to:
when the terminal device does not support positioning based on the plurality of satellites, determine the location of the terminal device based on the information about the neighboring cell of the serving cell of the terminal device and the uplink positioning information of the terminal device from the serving access network device corresponding to the serving satellite.

In a possible implementation, the processing unit is configured to:
determine the positioning satellites of the terminal device based on first information, where the first information includes ephemeris information and/or coverage information of the satellite.

In a possible implementation, the transceiver unit is configured to:
receive the uplink positioning information of the terminal device from the access network device corresponding to the positioning satellites.

In a possible implementation, the transceiver unit is configured to:
send a second message to the access network device corresponding to the positioning satellites, where the second message is used to trigger obtaining of the uplink positioning information of the terminal device.

In a possible implementation, the transceiver unit is configured to:
obtain the information about the neighboring cell when determining, based on the ephemeris information and beam information of the satellite, that a mirror problem exists in positioning of the terminal device; or
receive first indication information from the serving access network device corresponding to the serving satellite, and obtain the information about the neighboring cell based on the first indication information, where the first indication information indicates that a mirror problem exists in positioning of the terminal device.

In a possible implementation, the transceiver unit is configured to:
request the information about the neighboring cell from the serving access network device, and receive the information about the neighboring cell from the serving access network device; or
request the information about the neighboring cell from the terminal device, and receive the information about the neighboring cell from the terminal device.

In a possible implementation, the transceiver unit is configured to:
receive the information about the neighboring cell from the serving access network device corresponding to the serving satellite; or
receive the information about the neighboring cell from the terminal device.

In a possible implementation, the information about the neighboring cell includes one or more of the following information:
an identifier of the neighboring cell, information about a reference signal of the neighboring cell, or information about a beam of the neighboring cell.

According to a sixth aspect, this application provides a communication apparatus. The communication apparatus may be a first network device, or may be a module in the first network device. For example, the first network device may be a serving access network device or an access and mobility management function. The communication apparatus includes:
a processing unit, configured to obtain information about an access network device corresponding to at least one neighboring positioning satellite of a terminal device, where the neighboring positioning satellite is a neighboring satellite of a serving satellite of the terminal device; and
a transceiver unit, configured to send, to a location management function, the information about the access network device corresponding to the at least one neighboring positioning satellite.

In a possible implementation, the processing unit is configured to:
determine the positioning satellites of the terminal device based on first information, where the first information includes ephemeris information and/or coverage information of the satellite.

In a possible implementation, at least two satellites in the at least one neighboring positioning satellite and the serving satellite of the terminal device have different orbits.

In a possible implementation, all satellites in the at least one neighboring positioning satellite and the serving satellite have a same orbit.

In a possible implementation, the first network device is a serving access network device corresponding to the serving satellite, and the transceiver unit is configured to:
when determining, based on the ephemeris information and beam information of the satellite, that a mirror problem exists in positioning of the terminal device, send information about a neighboring cell of a serving cell of the terminal device or first indication information to the location management function, where the first indication information indicates that the mirror problem exists in positioning of the terminal device.

In a possible implementation, the first network device is a serving access network device corresponding to the serving satellite, and the transceiver unit is configured to:
receive, from the location management function, a request message for requesting information about the neighboring cell; and
send the information about the neighboring cell of the serving cell of the terminal device to the location management function based on the request message.

In a possible implementation, the information about the neighboring cell includes one or more of the following information:
an identifier of the neighboring cell, information about a reference signal of the neighboring cell, or information about a beam of the neighboring cell.

In a possible implementation, the first network device is the serving access network device corresponding to the serving satellite.

The transceiver unit is configured to receive a first message from the location management function, where the first message is used to trigger obtaining of uplink positioning information of the terminal device.

The processing unit is configured to obtain the uplink positioning information of the terminal device based on the first message.

The transceiver unit is configured to send the uplink positioning information of the terminal device to the location management function.

According to a seventh aspect, this application provides a communication apparatus. The communication apparatus includes a processor, and the processor is configured to execute a computer program, to enable the communication apparatus to perform the method in any implementation of any one of the first aspect to the third aspect.

In a possible design, the communication apparatus may be a chip, or a device including the chip, implementing the method in any implementation of any one of the first aspect to the third aspect.

In a possible design, the communication apparatus further includes a transceiver. The processor is coupled to the transceiver.

In a possible design, the communication apparatus further includes a memory. The processor is coupled to the memory, the memory stores a computer program, and the processor is further configured to invoke the computer program in the memory. For example, the processor and the memory may also be integrated together.

According to an eighth aspect, this application provides a communication apparatus. The communication apparatus includes a processor, and the processor is configured to implement the method in any implementation of any one of the first aspect to the third aspect by using a logic circuit or by executing code instructions.

Optionally, the communication apparatus further includes an interface circuit. The interface circuit is configured to: receive a signal from another communication apparatus other than the communication apparatus and transmit the signal to the processor, or send a signal from the processor to another communication apparatus other than the communication apparatus.

According to a ninth aspect, this application provides a computer-readable storage medium. The storage medium stores a computer program or instructions. When the computer program or the instructions are executed by a computer, the method in any one of the first aspect to the third aspect is implemented.

According to a tenth aspect, this application provides a computer program product. When a computer reads and executes the computer program product, the computer is enabled to perform the method in any implementation of any one of the first aspect to the third aspect.

According to an eleventh aspect, this application provides a communication system. The communication system includes a communication apparatus configured to implement the method in any implementation of the first aspect or the second aspect, and includes a communication apparatus configured to implement the method in any implementation of the third aspect.

For beneficial effect of the third aspect to the eleventh aspect, refer to the beneficial effect of the first aspect and the second aspect. Details are not described herein again.

### BRIEF DESCRIPTION OF DRAWINGS

FIG. 1 is a diagram of an architecture of a communication system to which an embodiment of this application is applied;
FIG. 2A to FIG. 2D are diagrams of NTN-based RAN architectures to which an embodiment of this application is applicable;
FIG. 3 is a diagram of a mirror problem when a single satellite is used for positioning;
FIG. 4 is a schematic flowchart of a communication method according to an embodiment of this application;
FIG. 5A and FIG. 5B are diagrams of scenarios of positioning satellites according to an embodiment of this application;
FIG. 6A to FIG. 6D are a schematic interaction flowchart of a communication method according to an embodiment of this application;
FIG. 7A to FIG. 7D are another schematic interaction flowchart of a communication method according to an embodiment of this application;
FIG. 8 is another schematic flowchart of a communication method according to an embodiment of this application;
FIG. 9A to FIG. 9D are still another schematic interaction flowchart of a communication method according to an embodiment of this application;
FIG. 10 is a diagram of a possible structure of a communication apparatus according to an embodiment of this application; and
FIG. 11 is a diagram of a possible structure of a communication apparatus according to an embodiment of this application.

### DESCRIPTION OF EMBODIMENTS

The following further describes specific embodiments of this application in detail with reference to accompanying drawings.

Terms "first", "second", and the like in this specification, the claims, and the accompanying drawings of this application are used to distinguish between different objects but do not indicate a particular sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

In this application, "sending information to... (for example, a terminal)" may be understood as that a destination end of the information is the terminal, and may include directly or indirectly sending the information to the terminal. "Receiving information from... (for example, a terminal)" or "receiving information that is from... (for example, a terminal)" may be understood as that a source end of the information is the terminal, and may include directly or indirectly receiving the information from the terminal. Necessary processing, for example, a format change, may be performed on information between a source end that sends the information and a destination end, but the destination end can understand valid information from the source end. A similar expression in this application may be understood similarly, and details are not described herein.

To better understand embodiments of this application, the following first describes a system architecture in embodiments of this application.

The technical solutions of this application may be applied to a non-terrestrial network (non-terrestrial network, NTN) scenario or a scenario in which the NTN and a terrestrial network (terrestrial network, TN) are integrated. An NTN system may be, for example, a satellite communication system, a high altitude platform station (high altitude platform station, HAPS) communication system, or a global navigation satellite system (global navigation satellite system, GNSS). For example, the TN system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new and NR) system), or a future mobile communication system.

The communication system provided in this application may include one or more network devices and one or more terminals.

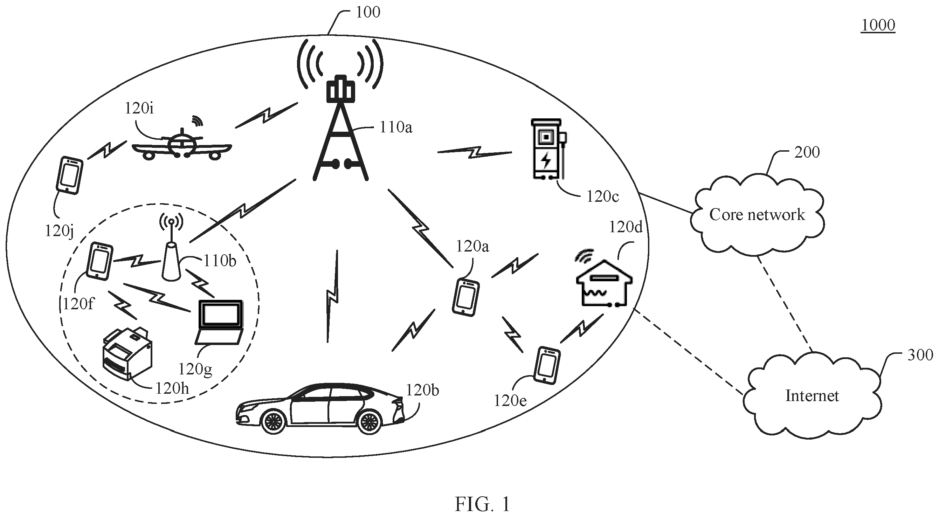

The following uses a system architecture shown in FIG. 1 as an example for description. FIG. 1 is a diagram of an architecture of a communication system to which an embodiment of this application is applied. As shown in FIG. 1, the communication system 1000 includes a radio access network (radio access network, RAN) 100 and a core network (core network, CN) 200. For example, the communication system 1000 may further include the Internet 300. The RAN 100 includes at least one network device (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

It should be noted that the RAN 100 may be a cellular system related to the 3rd generation partnership project (3rd generation partnership project, 3GPP), for example, a 4G mobile communication system, a 5G mobile communication system, or an evolved system after 5G. The RAN 100 may alternatively be an open access network (open RAN, O-RAN, or ORAN), a cloud radio access network (cloud radio access network, CRAN), or the like. The RAN 100 may alternatively be a communication system that integrates two or more of the foregoing systems. It should be noted that a quantity of network devices and a quantity of terminals in FIG. 1 are merely examples, and should not be considered as specific limitations on this application. The following describes in detail the terminal and the network device that are related to the system architecture.

### 1. Terminal

The terminal may also be referred to as a terminal device, user equipment (user equipment, UE), a mobile station (mobile station, MS), a mobile terminal (mobile terminal, MT), a mobile terminal device, mobile equipment (mobile equipment, ME), an access terminal, a subscriber unit, a subscriber station, a mobile station, a remote station, a remote terminal, a user terminal, a wireless communication device, a user agent, a user apparatus, or the like. Alternatively, the terminal is a device configured to provide voice or data connectivity for a user, or may be an Internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile Internet device (mobile Internet device, MID), a wearable device (for example, a smart watch, a smart band, or a pedometer), a vehicle-mounted device (for example, a car, a bicycle, an electric vehicle, an airplane, a ship, a train, or a high-speed train), a satellite terminal device, a virtual reality (virtual reality, VR) device, an augmented reality (augmented reality, AR) device, a smart point of sale (point of sale, POS) machine, customer-premises equipment (customer-premises equipment, CPE), a wireless terminal device in industrial control, a smart home device (for example, a refrigerator, a television, an air conditioner, or an electricity meter), a smart robot, a robot arm, a workshop device, a wireless terminal device in self-driving, a wireless terminal device in telemedicine, a wireless terminal device in a smart grid (smart grid), a wireless terminal device in transportation safety, a wireless terminal device in a smart city, a wireless terminal device in a smart home, a flight device (for example, a smart robot, a hot air balloon, an uncrewed aerial vehicle, or an airplane), or the like. The terminal device may alternatively be another device having a terminal device function. For example, the terminal device may alternatively be a device that functions as a terminal device in D2D communication.

In addition, the terminal device in embodiments of this application is a terminal device that supports an NTN access technology or has an NTN capability.

A device form of the terminal device is not limited in embodiments of this application. An apparatus for implementing a function of the terminal device may be a terminal device, or may be an apparatus, for example, a chip system, that supports the terminal device in implementing the function. The apparatus may be mounted in a terminal device or used in cooperation with the terminal device. In embodiments of this application, the chip system may include a chip, or may include a chip and another discrete component.

### 2. Network device

The network device is a node in a radio access network (radio access network, RAN), and may also be referred to as an access network device, or may also be referred to as a RAN node (or device). The network device is configured to help the terminal device implement wireless access. A plurality of network devices 110 in the communication system 1000 may be nodes of a same type, or may be nodes of different types. In some scenarios, roles of the network device 110 and the terminal 120 are relative. For example, a network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal device. The network device 110 and the terminal 120 are sometimes referred to as communication apparatuses. For example, the network elements 110a and 110b in FIG. 1 may be understood as communication apparatuses having a base station function, and the network elements 120a to 120j may be understood as communication apparatuses having a terminal device function.

In a possible scenario, the network device may be a device having a base station function, for example, an evolved NodeB (evolved NodeB, eNodeB), a transmission reception point (transmitting and receiving point, TRP), a transmission point (transmitting point, TP), a next generation NodeB (next generation NodeB, gNB), a next generation base station in a future mobile communication system, or an integrated access and backhaul (integrated access and backhaul, IAB) node.

In a possible scenario, the network device may alternatively be a non-terrestrial network device in an NTN, for example, may be a device deployed on a high-altitude platform, for example, a satellite. The network device may alternatively be a macro base station (for example, 110a in FIG. 1), a micro base station or an indoor base station (for example, 110b in FIG. 1), a relay node or a donor node, or a radio controller in a CRAN scenario. The network device may alternatively be a device that functions as a base station in device-to-device (device-to-device, D2D) communication, Internet of vehicles communication, uncrewed aerial vehicle communication, or machine communication. For example, the network device may alternatively be a server, a wearable device, a vehicle, a vehicle-mounted device, or the like. For example, a network device in a vehicle-to-everything (vehicle-to-everything, V2X) technology may be a roadside unit (roadside unit, RSU).

All or some functions of the network device in this application may alternatively be implemented by using a software function running on hardware, or may be implemented by using an instantiated virtualization function on a platform (for example, a cloud platform). The network device in this application may alternatively be a logical node, a logical module, or software that can implement all or a part of functions of the network device.

In another possible scenario, a plurality of network devices collaborate to assist the terminal device in implementing wireless access, and different network devices separately implement some functions of the base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

Optionally, the CN 200 may include one or more network function entities (or referred to as core network elements, logical network elements, network elements, entities, or the like), for example, an access and mobility management function (access and mobility management function, AMF), a location management function (location management function, LMF), and an application function (application function, AF). This is not limited in this application.

A form of the network device is not limited in embodiments of this application. An apparatus for implementing a function of the network device may be a network device, or may be an apparatus, for example, a chip system, that can support the network device in implementing the function. The apparatus may be mounted in the network device or used in cooperation with the network device.

To facilitate understanding of content of the solutions, the following further explains and describes some terms in embodiments of this application, so as to facilitate understanding by a person skilled in the art. This part is merely for ease of understanding, and cannot be considered as a specific limitation on this application.

### 1. NTN

The NTN is a non-terrestrial network, is a general term for networks including flying objects, and includes a satellite communication network, a high-altitude platform station (high-altitude platform station, HAPS), and an air-to-ground network.

The HAPS is carried on an airborne platform, and mainly includes an airplane, a balloon, and an airship. The high-altitude platform station serves as a mobile communication base station and provides a mobile service by using a same frequency band as a terrestrial mobile network. In other words, the NTN provides communication coverage for a terminal device by deploying a base station or a part of functions of the base station on a non-terrestrial network device (for example, a ship, a high-altitude platform, an uncrewed aerial vehicle, or a satellite), to improve reliability of a communication system. It should be noted that, for ease of understanding, the following uses only an example in which the non-terrestrial network device in the NTN is the satellite for description, and should not be considered as a specific limitation on this application.

The satellite communication network relies on a satellite-borne platform, and mainly includes a low earth orbit (low earth orbit, LEO) satellite, a medium earth orbit (medium earth orbit, MEO) satellite, and a geostationary earth orbit (geostationary earth orbit, GEO) satellite. Based on a relationship between satellites and base stations, the following several architectures may be obtained through classification.

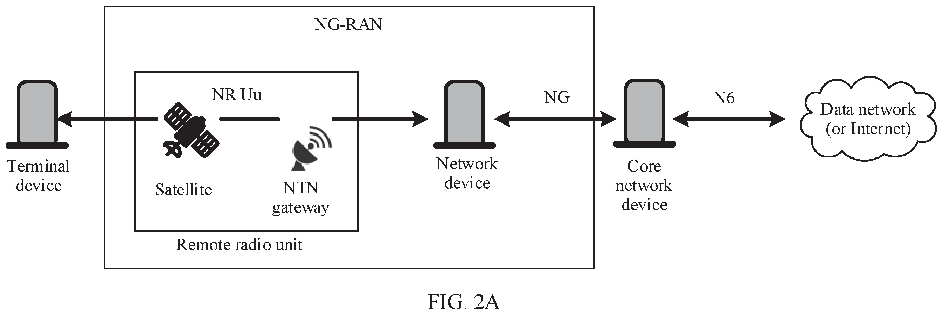

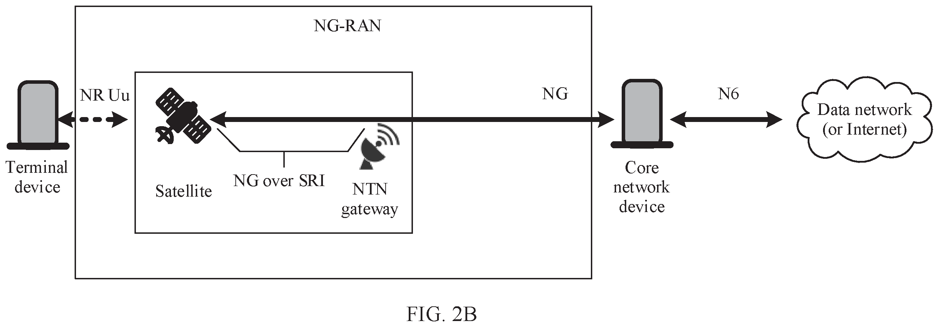

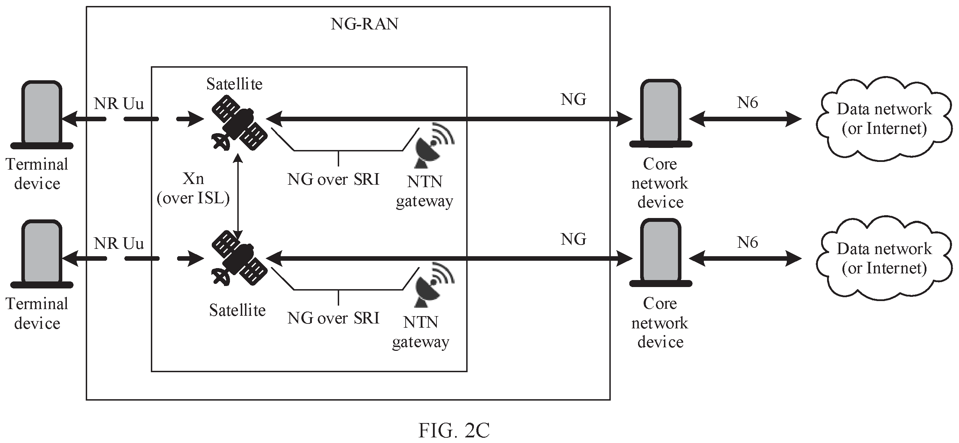

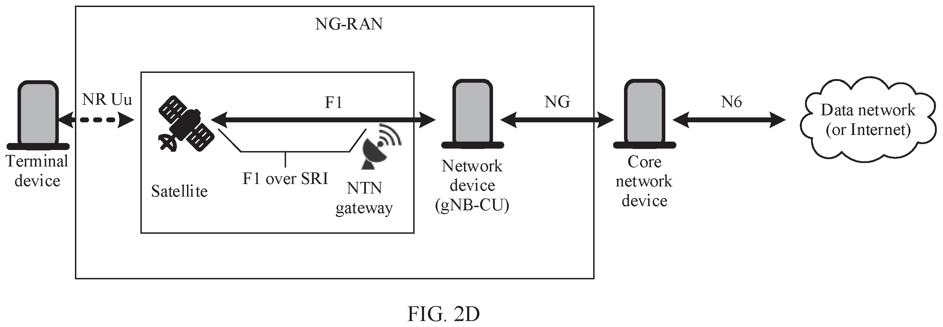

For example, FIG. 2A to FIG. 2D are diagrams of NTN-based RAN architectures to which an embodiment of this application is applicable. As shown in FIG. 2, the NTN-based RAN architecture may include a terminal device, a RAN (or referred to as an NG-RAN), a core network device, and a data network (or the Internet).

FIG. 2A shows an architecture of a transparent satellite (transparent satellite). A RAN may include a remote radio unit (remote radio unit, RRU) and a network device. The RRU may include a satellite and an NTN gateway (gateway). The terminal device communicates with the network device through a universal terrestrial radio access network-user (universal terrestrial radio access network-user, Uu) interface. The satellite may implement transparent payload transmission between a user and the network device. The satellite and the NTN gateway may be considered as remote radio units (remote radio units) of the network device, and implement transparent forwarding of a signal. In other words, the satellite supports functions such as radio frequency filtering, frequency conversion, and amplification, with a signal waveform remaining unchanged. Forwarding of the satellite is transparent to the terminal device, that is, the satellite mainly serves as a relay device (L1 relay) at a layer 1 (L1 for short), is configured to regenerate (that is, perform wireless frequency filtering, frequency conversion, and amplification on) a physical layer signal, and does not have another higher protocol layer. The network device and the core network device may communicate with each other through a next generation (next generation, NG) interface, and exchange non-access stratum (non-access stratum, NAS) signaling of a core network and service data of the terminal device through the NG interface.

FIG. 2B shows an architecture of a regenerative satellite without an inter-satellite link (regenerative satellite without inter-satellite link). A RAN includes the satellite and an NTN gateway. The satellite serves as a network device (for example, a base station) and has a processing function of the base station. The satellite communicates with the NTN gateway through a satellite radio interface (satellite radio interface, SRI). A terminal device communicates with the network device through a Uu interface. The network device and a core network device may communicate with each other through an NG interface, and exchange NAS signaling of a core network and service data of the terminal device through the NG interface.

FIG. 2C shows an architecture of a regenerative satellite with an inter-satellite link (regenerative satellite with inter-satellite link). A RAN includes the satellite and an NTN gateway. The satellite serves as a network device (for example, a base station) and has a processing function of the base station. The satellite communicates with the NTN gateway through an SRI. Satellites may communicate with each other through an Xn interface on an inter-satellite link (inter-satellite link, ISL). A terminal device communicates with the network device through a Uu interface. The network device and a core network device may communicate with each other through an NG interface, and exchange NAS signaling of a core network and service data of the terminal device through the NG interface.

FIG. 2D shows an architecture of a regenerative satellite with a DU processing function of a base station. The satellite serves as a DU and has the DU processing function. A CU and the DU may jointly complete a function of a network device (for example, the base station). The CU communicates with the DU through an F1 interface, and the DU communicates with an NTN gateway through an F1 interface on an SRI. A terminal device communicates with the DU through a Uu interface. The CU and a core network device may communicate with each other through an NG interface, and exchange NAS signaling of a core network and service data of the terminal device through the NG interface.

For example, in an architecture of a satellite having an integrated access and backhaul (integrated access and backhaul, IAB) function, the satellite serves as an IAB node. The IAB node is configured to provide a wireless backhaul (backhaul) service for a node (for example, a terminal device) that accesses a wireless backhaul node in a wireless manner. The wireless backhaul service is a data and/or signaling backhaul service provided through a wireless backhaul link.

### 2. Satellite coverage information

The satellite coverage information includes orbital parameter information or running information that may be used to predict a satellite location, a speed, a beam direction, a beam coverage location, or the like; or includes information indicating satellite coverage time or moment information of some geographical locations, a corresponding base station ID or cell ID, and the like. Optionally, the satellite coverage information may also be referred to as satellite coverage availability information, satellite running information, or the like. This is not limited in this application.

### 3. Ephemeris information

Each satellite has ephemeris information, which may also be referred to as a satellite ephemeris. The ephemeris information of the satellite may include information related to running of the satellite, for example, may include information such as a track table and/or an orbit parameter (for example, an altitude, a velocity, an angle of inclination, and an orientation), and may further include one or more pieces of information such as an angle of inclination of an orbit plane of the satellite, a right ascension of an ascending node, a semi-major axis of an orbital ellipse, an eccentricity of the orbital ellipse, an angular distance of a perigee, and a moment at which the satellite passes the perigee.

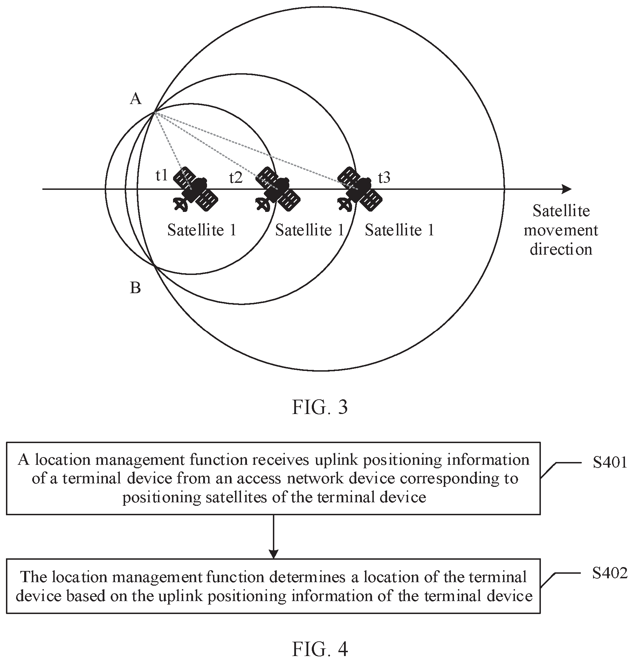

Currently, the 3GPP supports a positioning approach based on the movement of a single satellite, in which multiple RTT measurements are performed, to obtain a location of a terminal device. Typically, a distance between the satellite and the terminal device can be calculated based on each obtained RTT and the speed of light, and the location of the terminal device can be estimated based on at least three measurements. Specifically, as shown in FIG. 3, for satellite 1, three RTT measurements are performed at moments t1, t2, and t3. Taking positions of satellite 1 at these three time instants as the circle centers, and distances between satellite 1 and the terminal device as the radii, three circles are drawn. An intersection point of the three circles can be regarded as the location of the terminal device. However, in this positioning method for the terminal device based on the single satellite, the multiple RTT measurements need to be performed along with the movement of the single satellite, which takes long time to complete one positioning operation. In addition, the position of the terminal device obtained by the positioning may have two possible solutions (that is, a mirror ambiguity may occur), such as points A and B in FIG. 3, so that accurate positioning of the terminal device cannot be achieved.

In view of this, this application provides a communication method, to help improve positioning efficiency and positioning accuracy.

The following describes in detail the communication method and a communication apparatus provided in this application.

FIG. 4 is a schematic flowchart of a communication method according to an embodiment of this application. As shown in FIG. 4, the communication method may include step S401 and step S402 in the following. The method shown in FIG. 4 may be performed by a location management function or a chip in the location management function. For ease of description, this application is mainly described by using the location management function as an execution body. It should be noted that FIG. 4 is a schematic flowchart of a method embodiment of this application, and shows detailed communication steps or operations of the method. However, these steps or operations are merely examples. Other operations or variants of various operations in FIG. 4 may be further performed in embodiments of this application. In addition, the steps in FIG. 4 may be separately performed in a sequence different from that shown in FIG. 4, and possibly, not all operations in FIG. 4 need to be performed.

S401: The location management function receives uplink positioning information of a terminal device from an access network device corresponding to positioning satellites of the terminal device.

It should be understood that the positioning satellites of the terminal device in this application may be satellites for positioning the terminal device. For example, in one case, the positioning satellites of the terminal device may include a serving satellite and at least one neighboring positioning satellite of the terminal device. The neighboring positioning satellite may be a neighboring satellite of the serving satellite, that is, a satellite that has a neighboring relationship with the serving satellite. In another case, the positioning satellites of the terminal device may include a serving satellite of the terminal device.

Optionally, a relationship between the positioning satellites and the access network device (for example, a base station) corresponding to the positioning satellites may be understood as the following two types: In a transparent satellite architecture, the positioning satellite may be considered as a remote radio unit of the base station, and is configured to implement transparent forwarding of a signal, and the base station has a processing function. In a regenerative satellite architecture, the positioning satellite may be used as a base station, and has a processing function of the base station. Therefore, the access network device corresponding to the positioning satellites is equivalent to a device/module having a processing function in the positioning satellites.

Further, optionally, at least two satellites among the positioning satellites have different orbits, or all satellites in the positioning satellites have a same orbit. The orbit of the satellite may be a running orbit of the satellite.

Optionally, the location management function may send a first message to an access network device corresponding to the at least one neighboring positioning satellite and a serving access network device. The first message is used to trigger obtaining of the uplink positioning information of the terminal device, or the first message is used to request uplink measurement or uplink positioning measurement. Correspondingly, the access network device corresponding to the positioning satellites may perform uplink measurement based on the received first message, to obtain the uplink positioning information of the terminal device, and feed back the obtained uplink positioning information of the terminal device to the location management function. The satellite one-to-one corresponds to the access network device.

When the positioning satellites of the terminal device include the serving satellite and the at least one neighboring positioning satellite of the terminal device, in a possible scenario, at least two satellites among the positioning satellites of the terminal device have different orbits; and in another possible scenario, all satellites in the positioning satellites have a same orbit. The following separately describes different cases.

Usually, the at least one neighboring positioning satellite may be selected by a serving access network device or an access and mobility management function of the terminal device. Specifically, the serving access network device or the access and mobility management function may determine the at least one neighboring positioning satellite of the terminal device based on first information. The first information may include ephemeris information and/or coverage information of the satellite, and the like. This is not limited in this application.

Usually, after determining the at least one neighboring positioning satellite, the serving access network device or the access and mobility management function may send, to the location management function, information about the access network device corresponding to the at least one neighboring positioning satellite. Further, the location management function may send, based on the received information about the access network device corresponding to the at least one neighboring positioning satellite, the first message to the access network device corresponding to the at least one neighboring positioning satellite and the serving access network device. Details are not described again.

Optionally, the information about the access network device may be identifier information of the access network device, for example, an NR cell global identifier (NR cell global identifier, NCGI), a global access network identifier (Global RAN ID) of the access network device, or a medium access control (medium access control, MAC) address of the access network device. This is not limited herein.

Optionally, in an implementation, the uplink positioning information of the terminal device in this application includes a first receive-transmit time difference of the access network device (that is, a difference between time at which the access network device receives an uplink signal from the terminal device and time at which the access network device sends a downlink signal to the terminal device); or the uplink positioning information of the terminal device may include time at which the access network device receives an uplink signal from the terminal device and time at which the access network device sends a downlink signal to the terminal device. This is not limited herein.

Optionally, in another implementation, the uplink positioning information of the terminal device in this application may include a third receive-transmit time difference, and the third receive-transmit time difference is a difference between time at which the access network device receives an uplink signal from the terminal device and time at which the terminal device sends the uplink signal; or the uplink positioning information of the terminal device may include time at which the access network device receives an uplink signal from the terminal device and time at which the terminal device sends the uplink signal.

S402: The location management function determines a location of the terminal device based on the uplink positioning information of the terminal device.

In a feasible implementation, when time synchronization is performed between the terminal device and the access network device, the location management function may determine the location of the terminal device based on the uplink positioning information of the terminal device. For example, the location management function may determine the third receive-transmit time difference based on the uplink positioning information, and then determine a distance between the terminal and the satellite based on the speed of light. It may be understood that a plurality of distances may be determined based on multiple pieces of uplink positioning information fed back by a plurality of access network devices corresponding to a plurality of positioning satellites and the speed of light, and the location of the terminal device may be finally determined based on the plurality of distances. For example, a circle is drawn by using a location at which each satellite performs measurement as a center of the circle and a distance between each satellite and the terminal device. An intersection point of a plurality of circles may be used as the location of the terminal device. Optionally, the location of the terminal device may be an absolute location or a relative location of the terminal device. For example, the absolute location of the terminal device may be longitude/latitude information. For another example, the relative location of the terminal device may be a location of the terminal device relative to the serving satellite.

In another feasible implementation, that the location management function determines the location of the terminal device based on the uplink positioning information of the terminal device may be specifically understood as: The location management function determines the location of the terminal device based on the uplink positioning information of the terminal device and downlink positioning information of the terminal device. The downlink positioning information of the terminal device in this application includes the third receive-transmit time difference (that is, a difference between time at which the terminal device sends an uplink signal to the access network device and time at which the terminal device receives a downlink signal from the access network device) of the terminal device; or the downlink positioning information of the terminal device may include time at which the terminal device sends an uplink signal to the access network device and time at which the terminal device receives a downlink signal from the access network device. This is not limited herein.

In a possible implementation, the location management function may determine the first receive-transmit time difference of the access network device based on the received uplink positioning information, determine the third receive-transmit time difference of the terminal device based on the received downlink positioning information; subtract the third receive-transmit time difference from the first receive-transmit time difference, to obtain a round trip delay (or referred to as round trip time); and further determine the distance between the terminal and the satellite based on the round trip delay and the speed of light. It may be understood that the plurality of distances may be obtained based on the multiple pieces of uplink positioning information fed back by the plurality of access network devices corresponding to the plurality of positioning satellites, the downlink positioning information fed back by the terminal device, and the speed of light, and the location of the terminal device may be finally determined based on the plurality of distances. For example, a circle is drawn by using a location at which each satellite performs measurement as a center of the circle and a distance between each satellite and the terminal device. An intersection point of a plurality of circles may be used as the location of the terminal device. Optionally, the location of the terminal device may be an absolute location or a relative location of the terminal device. For example, the absolute location of the terminal device may be longitude/latitude information. For another example, the relative location of the terminal device may be a location of the terminal device relative to the serving satellite.

It may be understood that the multiple pieces of uplink positioning information in this application are three or more pieces of uplink positioning information. Typically, when there is one positioning satellite (for example, the positioning satellite is a serving satellite), the serving satellite needs to perform three uplink measurements at at least three different time moments, to obtain multiple pieces of uplink positioning information. When there are two positioning satellites (for example, a serving satellite and a neighboring positioning satellite 1), at least one of the serving satellite and the neighboring positioning satellite 1 needs to perform two or more uplink measurements, to obtain multiple pieces of uplink positioning information. When there are three or more positioning satellites, the positioning satellites may simultaneously perform uplink measurement, to obtain multiple pieces of uplink positioning information.

Optionally, the method further includes: The location management function sends a second message to the terminal device, where the second message is used to trigger obtaining of the downlink positioning information of the terminal device, or the second message is used to request downlink measurement or downlink positioning measurement. Correspondingly, after receiving the second message, the terminal device may perform downlink measurement based on the received second message, to obtain the downlink positioning information of the terminal device, and feed back the obtained downlink positioning information of the terminal device to the location management function.

Optionally, the terminal device may send capability information to the location management function, and the capability information indicates whether the terminal device supports positioning based on a plurality of satellites. Correspondingly, the location management function may determine, based on the capability information from the terminal device, whether the terminal device supports positioning based on the plurality of satellites. The plurality of satellites may be two or more satellites.

In still another feasible implementation, step S402 may specifically include: When the terminal device supports positioning based on the plurality of satellites, the location management function determines the location of the terminal device based on the uplink positioning information of the terminal device.

Optionally, the method further includes: when the terminal device does not support positioning based on the plurality of satellites, determining the location of the terminal device based on information about a neighboring cell of a serving cell of the terminal device and the uplink positioning information of the terminal device from the serving access network device corresponding to the serving satellite. Usually, when the terminal device does not support positioning based on the plurality of satellites, the location management function may specifically determine the location of the terminal device based on the information about the neighboring cell of the serving cell of the terminal device and the multiple pieces of uplink positioning information from the serving access network device corresponding to the serving satellite.

In still another feasible implementation, step S402 may specifically include: determining the location of the terminal device based on the information about the neighboring cell of the serving cell of the terminal device and the uplink positioning information of the terminal device. The information about the neighboring cell includes one or more of the following information: an identifier of the neighboring cell, information about a reference signal of the neighboring cell, information about a beam of the neighboring cell, or the like. For ease of understanding, the following mainly uses an example in which the information about the neighboring cell is the identifier of the neighboring cell for description.

In an implementation, because neighboring cells of different mirror points are different, the location management function may specifically determine, based on a relative location relationship between the neighboring cell and the serving cell, the location of the terminal device from candidate locations that mirror each other. For example, it is assumed that the neighboring cell of the serving cell is Cell ID #11. Because a location of the cell Cell ID #11 relative to the serving cell is in the north of the serving cell, a candidate location in the north of a mirror point may be determined as the location of the terminal device. Herein, a manner of the relative location relationship in the south/east/west/north is merely an example, and there may be another manner. This is not limited in this application. It should be understood that the candidate location may be determined based on the uplink positioning information, or may be determined based on the uplink positioning information and the downlink positioning information.

Optionally, this implementation may be applied to the following two cases. Case 1: The positioning satellites of the terminal device include the serving satellite and the at least one neighboring positioning satellite of the terminal device, and all satellites in the positioning satellites have a same orbit. Case 2: The positioning satellite of the terminal device includes only the serving satellite of the terminal device. Case 3: The terminal device does not support positioning based on the plurality of satellites. In the three cases, a mirroring problem may exist in positioning of the terminal device. To avoid the mirroring problem, the location management function may determine the location of the terminal device based on the uplink positioning information of the terminal device and the information about the neighboring cell of the serving cell of the terminal device; or the location management function may determine the location of the terminal device based on the information about the neighboring cell of the serving cell of the terminal device, the uplink positioning information of the terminal device, and the downlink positioning information of the terminal device.

It should be noted that, when all satellites in the positioning satellites have a same orbit, the uplink positioning information of the terminal device is uplink positioning information, of the terminal device, separately fed back by the access network devices corresponding to all the positioning satellites; or when the positioning satellite includes only the serving satellite of the terminal device, the uplink positioning information of the terminal device is uplink positioning information, of the terminal device, fed back by the serving access network device corresponding to the serving satellite. Herein, the information about the neighboring cell of the serving cell of the terminal device (referred to as information about the neighboring cell or neighboring cell information below for short) may be sent by the serving access network device or the terminal device to the location management function.

The location management function may obtain the information about the neighboring cell of the serving cell of the terminal device in the following implementations:

In an implementation, alternatively, the serving access network device or the terminal device may actively send the information about the neighboring cell to the location management function. Correspondingly, the location management function receives the information about the neighboring cell.

In another implementation, the location management function requests the information about the neighboring cell from the serving access network device or the terminal device. Correspondingly, the serving access network device or the terminal device may send the information about the neighboring cell to the location management function based on the request. For example, when the location management function determines, based on the ephemeris information and beam information (for example, angle information) of the satellite, that the mirror problem exists in positioning of the terminal device, the location management function requests information about the neighboring cell from the serving access network device or the terminal device. For another example, when the serving access network device or the access and mobility management function determines, based on the ephemeris information and beam information of the satellite, that the mirror problem exists in positioning of the terminal device, the serving access network device or the access and mobility management function may send first indication information to the location management function. The first indication information indicates that the mirror problem exists in positioning of the terminal device. Therefore, the location management function may request the information about the neighboring cell from the serving access network device or the terminal device based on the first indication information.

Optionally, that the location management function requests the information about the neighboring cell from the serving access network device or the terminal device may be understood as follows: The location management function sends, to the serving access network device or the terminal device, a request used to obtain the information about the neighboring cell (or sends an indication indicating that the information about the neighboring cell needs to be reported), and the serving access network device or the terminal device sends the information about the neighboring cell to the location management function based on the request/indication.

It should be noted that the foregoing several feasible implementations may be combined with each other. This is not limited.

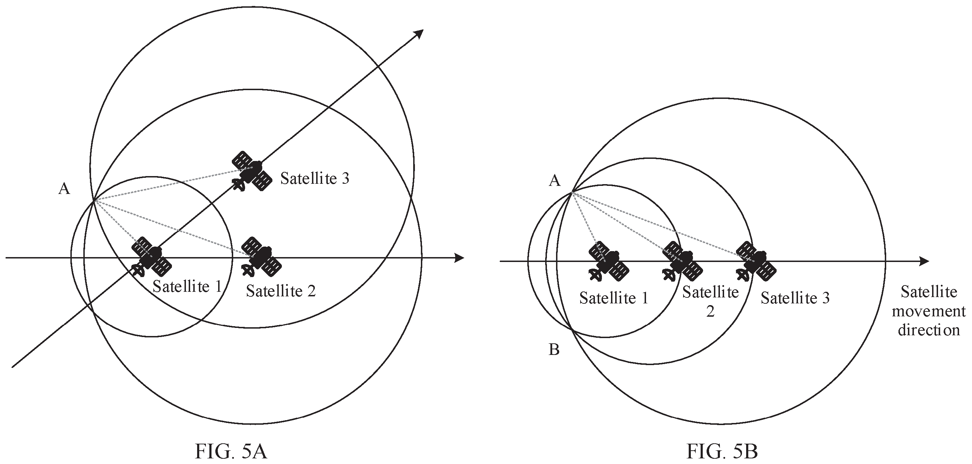

The following further describes this application by using specific scenarios. For example, FIG. 5A and FIG. 5B are diagrams of scenarios of positioning satellites according to an embodiment of this application. As shown in FIG. 5A, positioning satellites of the terminal device include a satellite 1 (namely, a serving satellite), a satellite 2, and a satellite 3, and an orbit of the satellite 2 is different from an orbit of the satellite 3. As shown in FIG. 5B, positioning satellites of the terminal device include a satellite 1 (namely, a serving satellite), a satellite 2, and a satellite 3, and all satellites in the positioning satellites have a same orbit, that is, orbits of the satellite 1, the satellite 2, and the satellite 3 are the same. It should be understood that, in this application, the orbits being the same indicate same orbits (that is, the orbits and altitudes of the orbits are the same). In this application, the orbits being different indicate different orbits, which are not limited to whether altitudes of the orbits are the same. For example, an altitude of an orbit 1 of the serving satellite is H0, and an orbit 2 (an altitude is also H0) and an orbit 3 (an altitude is H1) are different from the orbit 1. The orbit 1, the orbit 2, and the orbit 3 may be considered as different orbits.

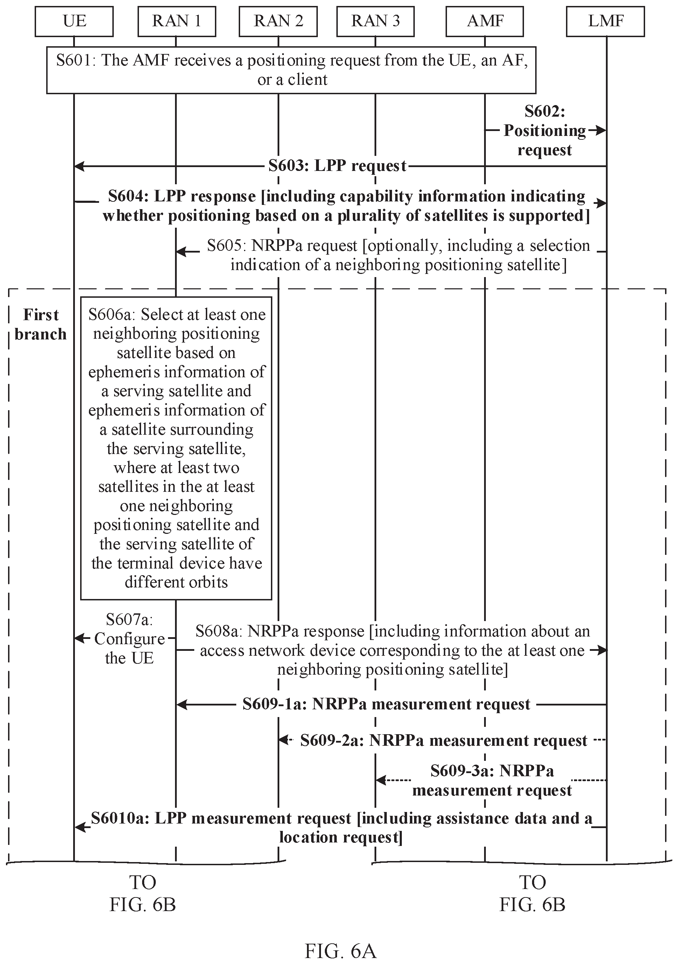

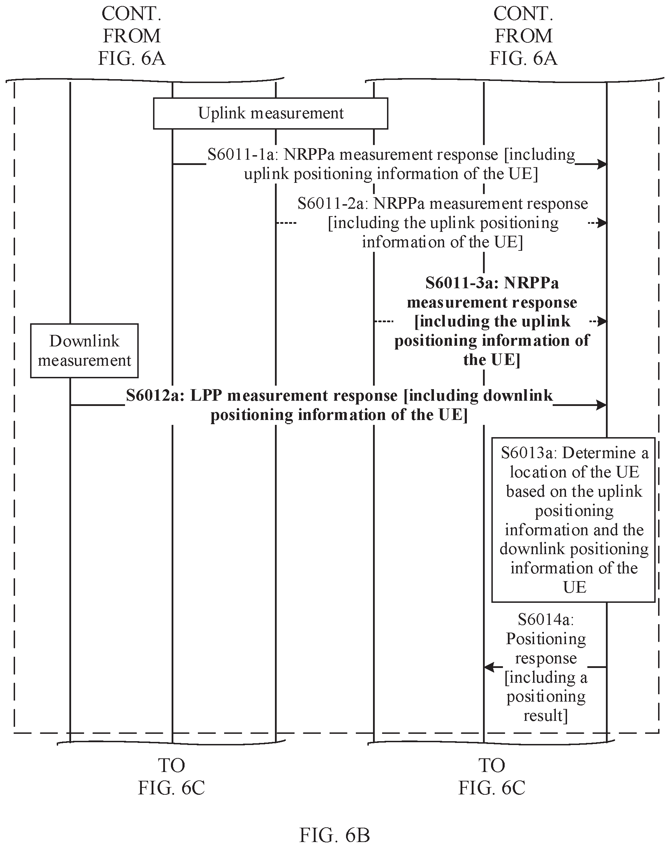

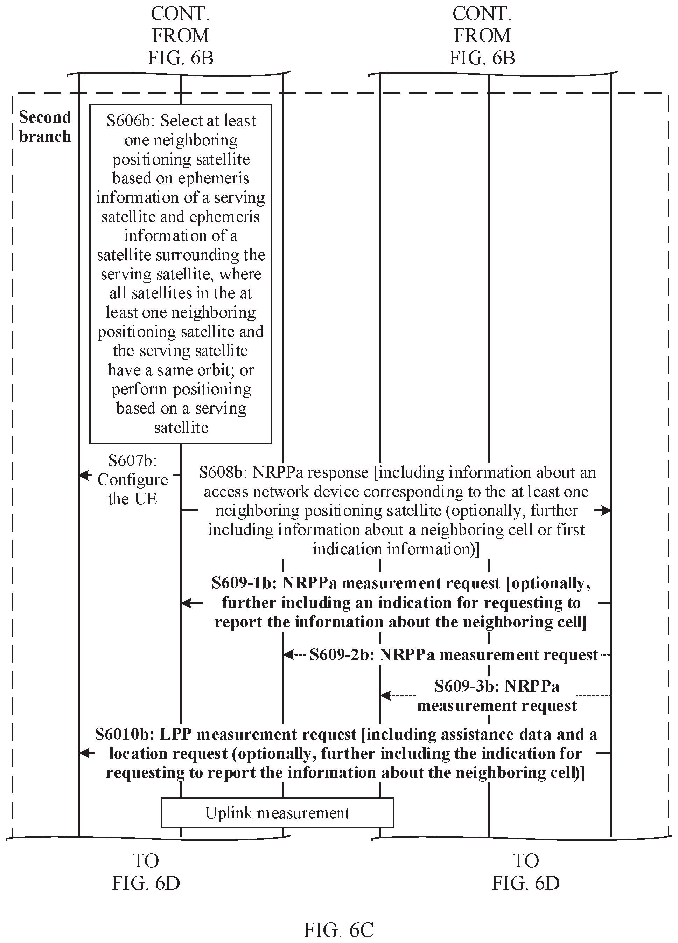

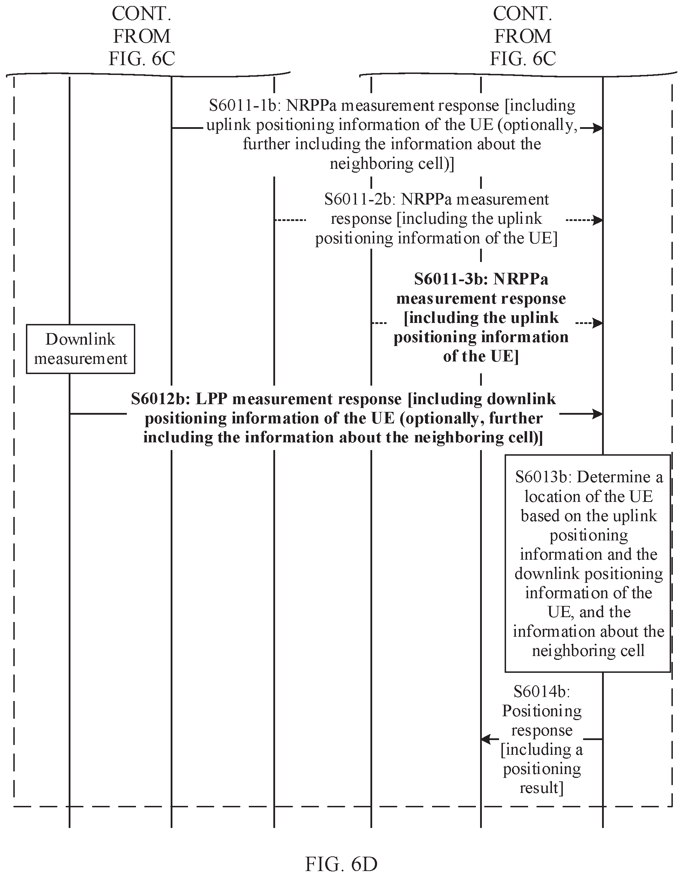

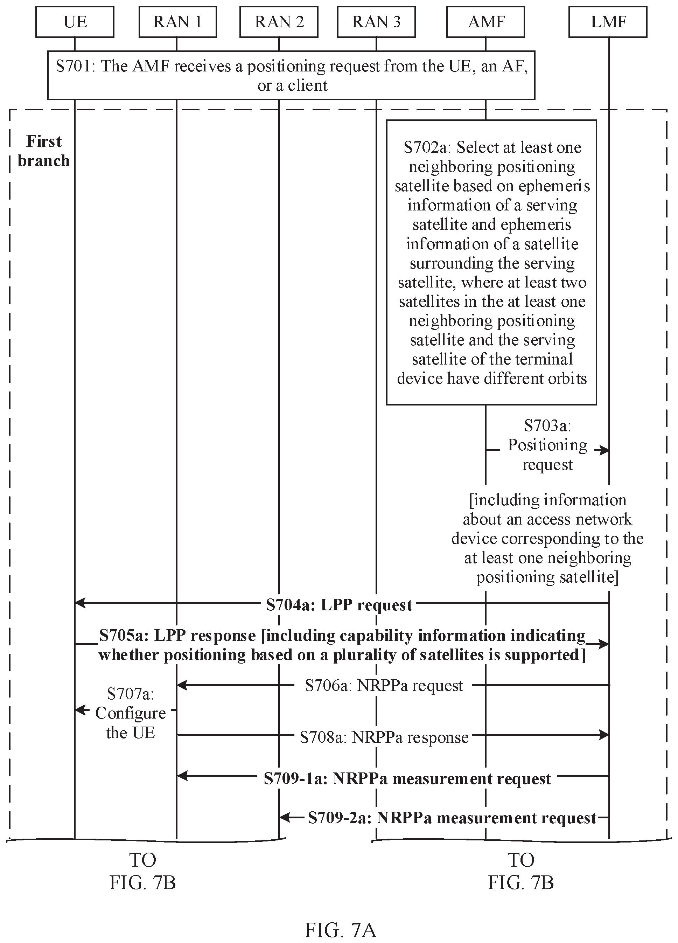

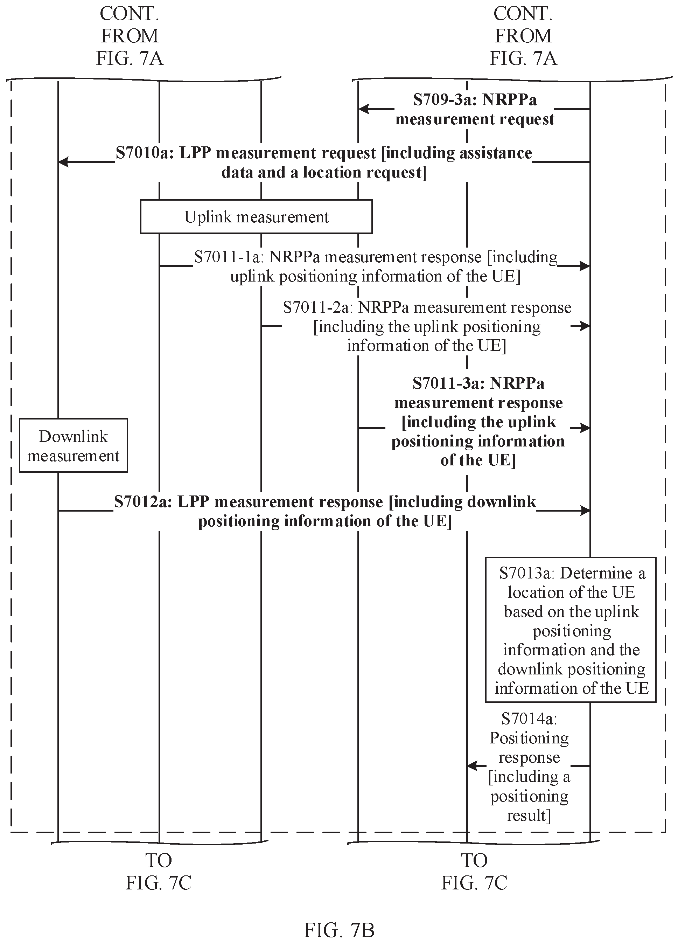

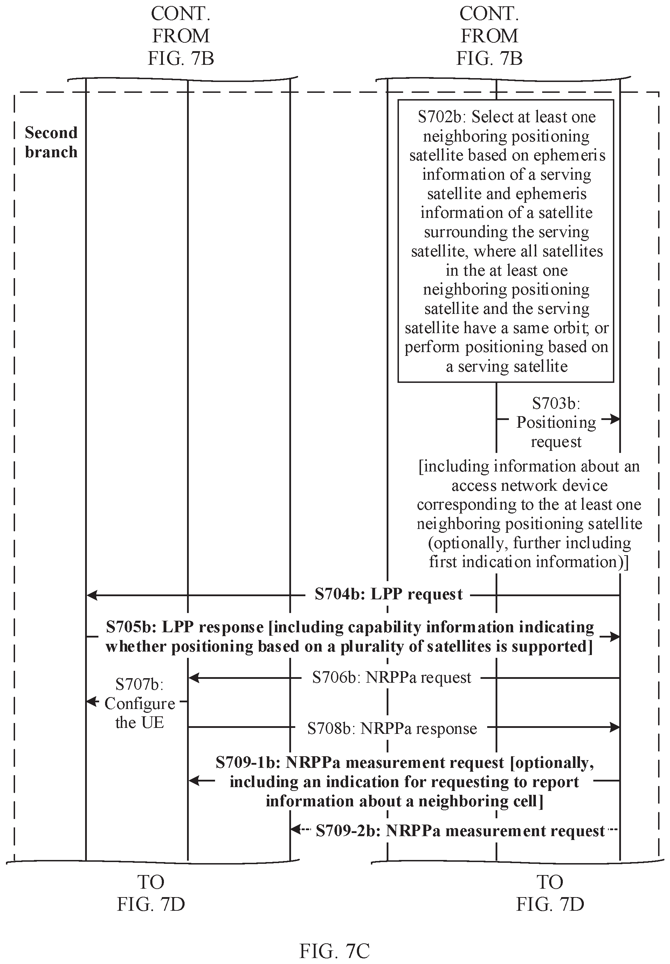

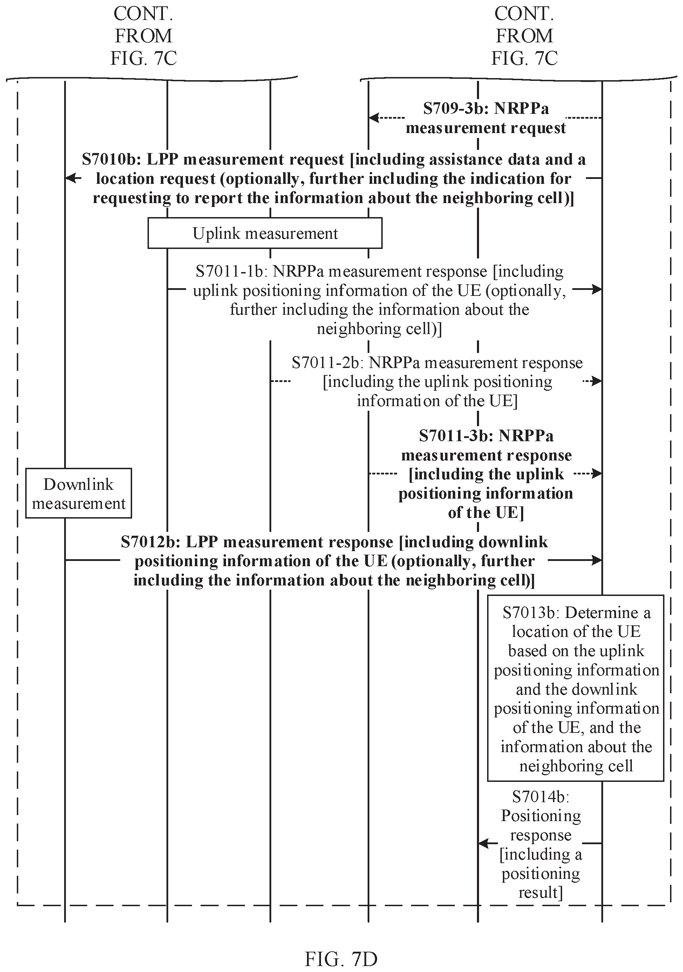

It may be understood that, as described above, the serving access network device corresponding to the serving satellite or the access and mobility management function may select the at least one neighboring positioning satellite, and provide the information about the access network device corresponding to the at least one neighboring positioning satellite for the location management function. Therefore, the following separately describes the two cases in detail with reference to FIG. 6A to FIG. 6D and FIG. 7A to FIG. 7D.

FIG. 6A to FIG. 6D show a solution in which the serving access network device selects the at least one neighboring positioning satellite. As shown in FIG. 6A to FIG. 6D, a RAN 1 is an access network device (namely, a serving access network device) corresponding to the satellite 1 (namely, a serving satellite), a RAN 2 is an access network device corresponding to the satellite 2, and a RAN 3 is an access network device corresponding to the satellite 3.

S601: UE, an AF, or a client (Client) may send a positioning request to an AMF. Correspondingly, the AMF may receive the positioning request from the UE, the AF, or the client (Client).

Herein, the positioning request is a request for positioning a location of the UE.

S602: The AMF sends a positioning request to an LMF. Correspondingly, the LMF receives the positioning request from the AMF.

In some feasible implementations, the AMF may send the positioning request to the LMF based on the received positioning request. The positioning request sent by the AMF includes information about a serving cell of the UE, for example, an identifier of the serving cell.

Optionally, when the AMF has a requirement for obtaining the location of the UE, the AMF may initiate the positioning request for the UE, and send the positioning request to the LMF. The positioning request carries the information about the serving cell of the UE.

S603: The LMF sends a long term evolution positioning protocol (LTE positioning protocol, LPP) request to the UE. Correspondingly, the UE receives the LPP request from the LMF.

The LPP request is used to request to obtain a positioning capability/method supported by the UE.

S604: The UE sends an LPP response to the LMF. Correspondingly, the LMF receives the LPP response from the UE.

The LPP response includes capability information indicating whether the UE supports positioning based on a plurality of satellites.

S605: The LMF sends a new radio positioning protocol A (new radio positioning protocol A, NRPPa) request to the RAN 1. Correspondingly, the RAN 1 receives the NRPPa request from the LMF.

The NRPPa request is used to request uplink-sounding reference signal (Uplink-Sounding Reference Signaling, UL-SRS) configuration information of the UE, for example, request a quantity/duration of UL-SRS transmissions, a bandwidth, a resource type, a requested SRS resource set, a quantity of resources in each SRS resource set, and a carrier frequency of an SRS transmission bandwidth. Optionally, the NRPPa request may further include selection indication information of a neighboring positioning satellite.

The following separately describes a first branch corresponding to the scenario shown in FIG. 5A and a second branch corresponding to the scenario shown in FIG. 5B.

### First branch

S606a: The RAN 1 selects at least one neighboring positioning satellite based on ephemeris information of the serving satellite and ephemeris information of a satellite surrounding the serving satellite.

In some feasible implementations, the RAN 1 may determine, based on the selection indication information, the ephemeris information of the serving satellite, and the ephemeris information of the satellite surrounding the serving satellite, whether two or more satellites including the serving satellite can be used for positioning. If no, positioning is performed based on a single satellite, that is, positioning is performed based on the serving satellite. If yes, the at least one neighboring positioning satellite is selected, where at least two satellites in the at least one neighboring positioning satellite and the serving satellite of the terminal device have different orbits. For example, the orbit of the satellite 2 is different from the orbit of the satellite 3 shown in FIG. 5A. It should be understood that the first branch is mainly described by using a case in which two or more satellites including the serving satellite may be used for positioning, and at least two satellites among the positioning satellites have different orbits.

S607a: The RAN 1 configures the UE.

In some feasible implementations, the RAN 1 may determine, based on the NRPPa request received in S605, a UL-SRS resource set that can be used for the UE, and configure the UL-SRS resource set that can be used for the UE.

S608a: The RAN 1 sends an NRPPa response to the LMF. Correspondingly, the LMF receives the NRPPa response from the RAN 1.

In some feasible implementations, after completing configuration of the UE, the RAN may send the NRPPa response to the LMF. The NRPPa response includes UL-SRS configuration information and information about an access network device corresponding to the at least one neighboring positioning satellite selected in step S606a. Alternatively, the UL-SRS configuration information may include the information about the access network device corresponding to the at least one neighboring positioning satellite. The information about the access network device may be an identifier of the access network device, an NCGI, or the like. This is not limited herein.

S609-1a to S609-3a: The LMF sends an NRPPa measurement request to the RAN 1, the RAN 2, and the RAN 3 respectively. Correspondingly, the RAN 1, the RAN 2, and the RAN 3 receive the NRPPa measurement request from the LMF.

In some feasible implementations, the NRPPa measurement request includes TRP measurement request information including a TRP ID, an NCGI of a TRP that receives a UL-SRS, UE-SRS configuration, a measurement period, measurement quality, response time, and the like.

It may be understood that the RAN 1, the RAN 2, and the RAN 3 may perform uplink measurement based on the received NRPPa measurement request, to obtain uplink positioning information of the UE.

S6010a: The LMF sends an LPP measurement request to the UE. Correspondingly, the UE receives the LPP measurement request from the LMF.

In some feasible implementations, the LPP measurement request includes assistance data and a location request. The assistance data includes data, for example, an NCGI and DL-PRS configuration of candidate TRPs, required by the UE to perform downlink-positioning reference signal (downlink-positioning reference signaling, DL-PRS) measurement. The location request is used to request the UE to perform downlink measurement.

It may be understood that the UE may perform downlink measurement based on the LPP measurement request, to obtain downlink positioning information of the UE.

S6011-1a to S6011-3a: The RAN 1, the RAN 2, and the RAN 3 respectively send NRPPa measurement responses to the LMF. Correspondingly, the LMF receives the NRPPa measurement responses from the RAN 1, the RAN 2, and the RAN 3.

The NRPPa measurement response includes the uplink positioning information of the UE.

S6012a: The UE sends an LPP measurement response to the LMF. Correspondingly, the LMF receives the LPP measurement response from the UE.

The LPP measurement response includes the downlink positioning information of the UE.

S6013a: The LMF determines the location of the UE based on the uplink positioning information and the downlink positioning information of the UE.

S6014a: The LMF sends a positioning response to the AMF. Correspondingly, the AMF receives the positioning response from the LMF.

The positioning response includes a positioning result.

### Second branch

S606b: The RAN 1 selects at least one neighboring positioning satellite based on ephemeris information of the serving satellite and ephemeris information of a satellite surrounding the serving satellite.

In some feasible implementations, the RAN 1 may determine, based on the selection indication information, the ephemeris information of the serving satellite, and the ephemeris information of the satellite surrounding the serving satellite, whether two or more satellites including the serving satellite can be used for positioning. If no, positioning is performed based on a single satellite, that is, positioning is performed based on the serving satellite. If yes, the at least one neighboring positioning satellite is selected, where all satellites in the at least one neighboring positioning satellite and the serving satellite have a same orbit. For example, as shown in FIG. 5B, the orbit of the satellite 1, the orbit of the satellite 2, and the orbit of the satellite 3 are a same orbit. It should be understood that the second branch is mainly described by using a case in which two or more satellites including a serving satellite may be used for positioning, and all satellites in the positioning satellites have a same orbit.

S607b: The RAN 1 configures the UE.

In some feasible implementations, the RAN 1 may determine, based on the NRPPa request received in S605, a UL-SRS resource set that can be used for the UE, and configure the UL-SRS resource set that can be used for the UE.

S608b: The RAN 1 sends an NRPPa response to the LMF. Correspondingly, the LMF receives the NRPPa response from the RAN 1.

In some feasible implementations, after completing configuration of the UE, the RAN may send the NRPPa response to the LMF. The NRPPa response includes UL-SRS configuration information and information about an access network device corresponding to the at least one neighboring positioning satellite selected in step S606a. Alternatively, the UL-SRS configuration information may include the information about the access network device corresponding to the at least one neighboring positioning satellite. The information about the access network device may be an identifier of the access network device, an NCGI, or the like. This is not limited herein.

Optionally, a mirror problem may occur when positioning is performed based on a single satellite or positioning is performed based on a plurality of satellites with a same orbit. Therefore, the NRPPa response may further include information about a neighboring cell or first indication information, where the first indication information indicates that the mirror problem exists in positioning of the terminal device. In other words, when positioning is performed based on the single satellite or the plurality of satellites with a same orbit, the RAN 1 may directly send the information about the neighboring cell to the LMF, or may indicate to the LMF that the mirror problem exists, so that the LMF may subsequently request the information about the neighboring cell based on the indication of the RAN 1.

S609-1b to S609-3b: The LMF sends an NRPPa measurement request to the RAN 1, the RAN 2, and the RAN 3 respectively. Correspondingly, the RAN 1, the RAN 2, and the RAN 3 receive the NRPPa measurement request from the LMF.

In some feasible implementations, the NRPPa measurement request includes TRP measurement request information including a TRP ID, an NCGI of a TRP that receives a UL-SRS, UE-SRS configuration, a measurement period, measurement quality, response time, and the like.

Optionally, the NRPPa measurement request sent by the LMF to the RAN 1 may further include an indication for requesting to report information about a neighboring cell. Therefore, in addition to reporting the uplink positioning information of the UE, the RAN 1 further needs to report the information about the neighboring cell of the serving cell of the UE.

It may be understood that the RAN 1, the RAN 2, and the RAN 3 may perform uplink measurement based on the received NRPPa measurement request, to obtain uplink positioning information of the UE.

S6010b: The LMF sends an LPP measurement request to the UE. Correspondingly, the UE receives the LPP measurement request from the LMF.

In some feasible implementations, the LPP measurement request includes assistance data and a location request. The assistance data includes data, for example, an NCGI and DL-PRS configuration of candidate TRPs, required by the UE to perform downlink-positioning reference signal (downlink-positioning reference signaling, DL-PRS) measurement. The location request is used to request the UE to perform downlink measurement.

Optionally, the LPP measurement request sent by the LMF to the UE may further include an indication for requesting to report information about a neighboring cell. Therefore, in addition to reporting downlink positioning information of the UE, the UE further needs to report the information about the neighboring cell of the serving cell of the UE.

It may be understood that the UE may perform downlink measurement based on the LPP measurement request, to obtain the downlink positioning information of the UE.

S6011-1b to S6011-3b: The RAN 1, the RAN 2, and the RAN 3 respectively send NRPPa measurement responses to the LMF. Correspondingly, the LMF receives the NRPPa measurement responses from the RAN 1, the RAN 2, and the RAN 3.

The NRPPa measurement response includes the uplink positioning information of the UE. Optionally, the NRPPa measurement response fed back by the RAN 1 may further include the information about the neighboring cell.

S6012b: The UE sends an LPP measurement response to the LMF. Correspondingly, the LMF receives the LPP measurement response from the UE.

The LPP measurement response includes the downlink positioning information of the UE. Optionally, the LPP measurement response may further include the information about the neighboring cell.

S6013b: The LMF determines the location of the UE based on the uplink positioning information and the downlink positioning information of the UE, and the information about the neighboring cell.

S6014b: The LMF sends a positioning response to the AMF. Correspondingly, the AMF receives the positioning response from the LMF.

The positioning response includes a positioning result.

FIG. 7A to FIG. 7D show a solution in which the access and mobility management function selects the at least one neighboring positioning satellite. As shown in FIG. 7A to FIG. 7D, a RAN 1 is an access network device (namely, a serving access network device) corresponding to the satellite 1 (namely, a serving satellite), a RAN 2 is an access network device corresponding to the satellite 2, and a RAN 3 is an access network device corresponding to the satellite 3.

S701: UE, an AF, or a client (Client) may send a positioning request to an AMF. Correspondingly, the AMF may receive the positioning request from the UE, the AF, or the client (Client).

Herein, the positioning request is a request for positioning a location of the UE.

The following separately describes a first branch corresponding to the scenario shown in FIG. 5A and a second branch corresponding to the scenario shown in FIG. 5B.

### First branch

S702a: The AMF selects at least one neighboring positioning satellite based on ephemeris information of the serving satellite and ephemeris information of a satellite surrounding the serving satellite.

In some feasible implementations, the AMF may determine, based on the ephemeris information of the serving satellite and the ephemeris information of the satellite surrounding the serving satellite, whether two or more satellites including the serving satellite can be used for positioning. If no, positioning is performed based on a single satellite, that is, positioning is performed based on the serving satellite. If yes, the at least one neighboring positioning satellite is selected, where at least two satellites in the at least one neighboring positioning satellite and the serving satellite of the terminal device have different orbits. For example, the orbit of the satellite 2 is different from the orbit of the satellite 3 shown in FIG. 5A. It should be understood that the first branch is mainly described by using a case in which two or more satellites including the serving satellite may be used for positioning, and at least two satellites among the positioning satellites have different orbits.

Optionally, the AMF may alternatively determine, based on the serving satellite and coverage information of the satellite surrounding the serving satellite, whether two or more satellites including the serving satellite can be used for positioning. This is not limited in this application.

S703a: The AMF sends a positioning request to an LMF. Correspondingly, the LMF receives the positioning request from the AMF.

In some feasible implementations, the AMF may send the positioning request to the LMF based on the received positioning request. The positioning request sent by the AMF includes information about a serving cell of the UE, for example, an identifier of the serving cell. In addition, the positioning request sent by the AMF may further include information about an access network device corresponding to the at least one neighboring positioning satellite. The information about the access network device may be an identifier of the access network device, an NCGI, or the like. This is not limited herein.

Optionally, when the AMF has a requirement for obtaining the location of the UE, the AMF may initiate the positioning request for the UE, and send the positioning request to the LMF. The positioning request carries the information about the serving cell of the UE and the information about the access network device corresponding to the at least one neighboring positioning satellite.

S704a: The LMF sends an LPP request to the UE. Correspondingly, the UE receives the LPP request from the LMF.

The LPP request is used to request to obtain a positioning capability/method supported by the UE.

S705a: The UE sends an LPP response to the LMF. Correspondingly, the LMF receives the LPP response from the UE.

The LPP response includes capability information indicating whether the UE supports positioning based on a plurality of satellites.

S706a: The LMF sends an NRPPa request to the RAN 1. Correspondingly, the RAN 1 receives the NRPPa request from the LMF.

The NRPPa request is used to request UL-SRS configuration information of the UE, for example, request a quantity/duration of UL-SRS transmissions, a bandwidth, a resource type, a requested SRS resource set, a quantity of resources in each SRS resource set, and a carrier frequency of an SRS transmission bandwidth.

S707a: The RAN 1 configures the UE.

In some feasible implementations, the RAN 1 may determine, based on the NRPPa request received in S706a, a UL-SRS resource set that can be used for the UE, and configure the UL-SRS resource set that can be used for the UE.

S708a: The RAN 1 sends an NRPPa response to the LMF. Correspondingly, the LMF receives the NRPPa response from the RAN 1.

In some feasible implementations, after completing configuration of the UE, the RAN may send the NRPPa response to the LMF. The NRPPa response includes the UL-SRS configuration information.

S709-1a to S709-3a: The LMF sends an NRPPa measurement request to the RAN 1, the RAN 2, and the RAN 3 respectively. Correspondingly, the RAN 1, the RAN 2, and the RAN 3 receive the NRPPa measurement request from the LMF.

In some feasible implementations, the NRPPa measurement request includes TRP measurement request information including a TRP ID, an NCGI of a TRP that receives a UL-SRS, UE-SRS configuration, a measurement period, measurement quality, response time, and the like.

It may be understood that the RAN 1, the RAN 2, and the RAN 3 may perform uplink measurement based on the received NRPPa measurement request, to obtain uplink positioning information of the UE.

S7010a: The LMF sends an LPP measurement request to the UE. Correspondingly, the UE receives the LPP measurement request from the LMF.

In some feasible implementations, the LPP measurement request includes assistance data and a location request. The assistance data includes data, for example, an NCGI and DL-PRS configuration of candidate TRPs, required by the UE to perform DL-PRS measurement. The location request is used to request the UE to perform downlink measurement.

It may be understood that the UE may perform downlink measurement based on the LPP measurement request, to obtain downlink positioning information of the UE.

S7011-1a to S7011-3a: The RAN 1, the RAN 2, and the RAN 3 respectively send NRPPa measurement responses to the LMF. Correspondingly, the LMF receives the NRPPa measurement responses from the RAN 1, the RAN 2, and the RAN 3.

The NRPPa measurement response includes the uplink positioning information of the UE.

S7012a: The UE sends an LPP measurement response to the LMF. Correspondingly, the LMF receives the LPP measurement response from the UE.

The LPP measurement response includes the downlink positioning information of the UE.

S7013a: The LMF determines the location of the UE based on the uplink positioning information and the downlink positioning information of the UE.

S7014a: The LMF sends a positioning response to the AMF. Correspondingly, the AMF receives the positioning response from the LMF.

The positioning response includes a positioning result.

### Second branch

S702b: The AMF selects at least one neighboring positioning satellite based on ephemeris information of the serving satellite and ephemeris information of a satellite surrounding the serving satellite.

In some feasible implementations, the AMF may determine, based on the ephemeris information of the serving satellite and the ephemeris information of the satellite surrounding the serving satellite, whether two or more satellites including the serving satellite can be used for positioning. If no, positioning is performed based on a single satellite, that is, positioning is performed based on the serving satellite. If yes, the at least one neighboring positioning satellite is selected, where all satellites in the at least one neighboring positioning satellite and the serving satellite have a same orbit. For example, as shown in FIG. 5B, the orbit of the satellite 1, the orbit of the satellite 2, and the orbit of the satellite 3 are a same orbit. It should be understood that the second branch is mainly described by using a case in which two or more satellites including a serving satellite may be used for positioning, and all satellites in the positioning satellites have a same orbit.

Optionally, the AMF may alternatively determine, based on the serving satellite and coverage information of the satellite surrounding the serving satellite, whether two or more satellites including the serving satellite can be used for positioning. This is not limited in this application.

Optionally, a mirror problem may occur when positioning is performed based on a single satellite or positioning is performed based on a plurality of satellites with a same orbit. Therefore, the AMF may further determine, based on ephemeris information and beam information of the satellite, whether the mirror problem exists in positioning of the terminal device.

S703b: The AMF sends a positioning request to an LMF. Correspondingly, the LMF receives the positioning request from the AMF.

In some feasible implementations, the AMF may send the positioning request to the LMF based on the received positioning request. The positioning request sent by the AMF includes information about a serving cell of the UE, for example, an identifier of the serving cell. In addition, the positioning request sent by the AMF may further include information about an access network device corresponding to the at least one neighboring positioning satellite. The information about the access network device may be an identifier of the access network device, an NCGI, or the like. This is not limited herein.

Optionally, when the AMF has a requirement for obtaining the location of the UE, the AMF may initiate the positioning request for the UE, and send the positioning request to the LMF. The positioning request carries the information about the serving cell of the UE and the information about the access network device corresponding to the at least one neighboring positioning satellite.

Optionally, when determining, based on the ephemeris information and the beam information of the satellite, that the mirror problem exists in positioning of the terminal device, the AMF may further include first indication information in the positioning request, where the first indication information indicates that the mirror problem exists in positioning of the terminal device. Therefore, the LMF may subsequently request information about a neighboring cell based on the indication of the AMF.

S704b: The LMF sends an LPP request to the UE. Correspondingly, the UE receives the LPP request from the LMF.

The LPP request is used to request to obtain a positioning capability/method supported by the UE.

S705b: The UE sends an LPP response to the LMF. Correspondingly, the LMF receives the LPP response from the UE.

The LPP response includes capability information indicating whether the UE supports positioning based on a plurality of satellites.

S706b: The LMF sends an NRPPa request to the RAN 1. Correspondingly, the RAN 1 receives the NRPPa request from the LMF.

The NRPPa request is used to request UL-SRS configuration information of the UE, for example, request a quantity/duration of UL-SRS transmissions, a bandwidth, a resource type, a requested SRS resource set, a quantity of resources in each SRS resource set, and a carrier frequency of an SRS transmission bandwidth.

S707b: The RAN 1 configures the UE.

In some feasible implementations, the RAN 1 may determine, based on the NRPPa request received in S706b, a UL-SRS resource set that can be used for the UE, and configure the UL-SRS resource set that can be used for the UE.

S708b: The RAN 1 sends an NRPPa response to the LMF. Correspondingly, the LMF receives the NRPPa response from the RAN 1.

In some feasible implementations, after completing configuration of the UE, the RAN may send the NRPPa response to the LMF. The NRPPa response includes the UL-SRS configuration information.

S709-1b to S709-3b: The LMF sends an NRPPa measurement request to the RAN 1, the RAN 2, and the RAN 3 respectively. Correspondingly, the RAN 1, the RAN 2, and the RAN 3 receive the NRPPa measurement request from the LMF.

In some feasible implementations, the NRPPa measurement request includes TRP measurement request information including a TRP ID, an NCGI of a TRP that receives a UL-SRS, UE-SRS configuration, a measurement period, measurement quality, response time, and the like.

Optionally, when the mirror problem exists, the NRPPa measurement request sent by the LMF to the RAN 1 may further include an indication for requesting to report the information about the neighboring cell. Therefore, in addition to reporting the uplink positioning information of the UE, the RAN 1 further needs to report the information about the neighboring cell of the serving cell of the UE.

It may be understood that the RAN 1, the RAN 2, and the RAN 3 may perform uplink measurement based on the received NRPPa measurement request, to obtain uplink positioning information of the UE.

S7010b: The LMF sends an LPP measurement request to the UE. Correspondingly, the UE receives the LPP measurement request from the LMF.

In some feasible implementations, the LPP measurement request includes assistance data and a location request. The assistance data includes data, for example, an NCGI and DL-PRS configuration of candidate TRPs, required by the UE to perform DL-PRS measurement. The location request is used to request the UE to perform downlink measurement.

Optionally, when the mirror problem exists, the LPP measurement request sent by the LMF to the UE may further include an indication for requesting to report the information about the neighboring cell. Therefore, in addition to reporting the downlink positioning information of the UE, the UE further needs to report the information about the neighboring cell of the serving cell of the UE.

It may be understood that the UE may perform downlink measurement based on the LPP measurement request, to obtain the downlink positioning information of the UE.

S7011-1b to S7011-3b: The RAN 1, the RAN 2, and the RAN 3 respectively send NRPPa measurement responses to the LMF. Correspondingly, the LMF receives the NRPPa measurement responses from the RAN 1, the RAN 2, and the RAN 3.

The NRPPa measurement response includes the uplink positioning information of the UE. Optionally, the NRPPa measurement response fed back by the RAN 1 may further include the information about the neighboring cell.

S7012b: The UE sends an LPP measurement response to the LMF. Correspondingly, the LMF receives the LPP measurement response from the UE.

The LPP measurement response includes the downlink positioning information of the UE. Optionally, the LPP measurement response may further include the information about the neighboring cell.

S7013b: The LMF determines the location of the UE based on the uplink positioning information and the downlink positioning information of the UE, and the information about the neighboring cell.

S7014b: The LMF sends a positioning response to the AMF. Correspondingly, the AMF receives the positioning response from the LMF.

The positioning response includes a positioning result.

It should be noted that in this embodiment, the serving access network device corresponding to the serving satellite or the access and mobility management function may select the at least one neighboring positioning satellite, and provide, for the location management function, the information about the access network device corresponding to the at least one neighboring positioning satellite. Therefore, subsequently, the location management function may simultaneously trigger obtaining of the uplink positioning information of the terminal device from access network devices corresponding to the plurality of positioning satellites including the serving satellite and the at least one neighboring positioning satellite, to determine the location of the terminal device. This helps improve positioning efficiency, that is, reduce a positioning delay. In addition, if at least two satellites in the serving satellite and the at least one neighboring positioning satellite have different orbits, the mirroring problem can be avoided, to help improve positioning accuracy. If all satellites in the serving satellite and the at least one neighboring positioning satellite have a same orbit, the location management function may further determine the location of the terminal device based on the information about the neighboring cell of the serving cell of the terminal device, to resolve inaccurate positioning caused by the mirroring problem.

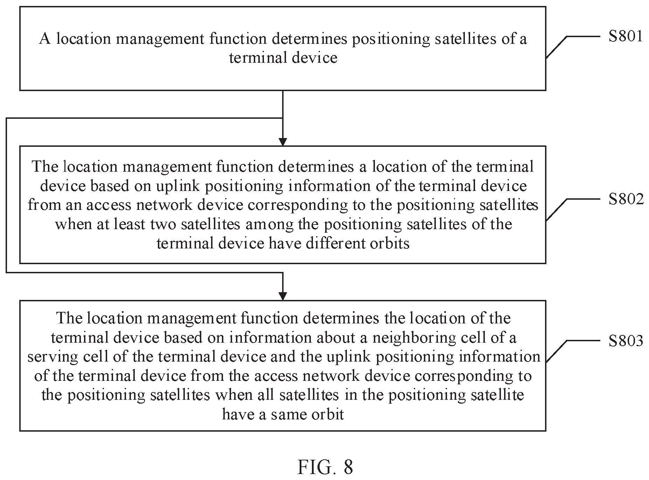

FIG. 8 is another schematic flowchart of a communication method according to an embodiment of this application. As shown in FIG. 8, the communication method includes step S801 to step S803 in the following. The method shown in FIG. 8 may be performed by a location management function or a chip in the location management function. For ease of description, this application is mainly described by using the location management function as an execution body. It should be noted that FIG. 8 is a schematic flowchart of a method embodiment of this application, and shows detailed communication steps or operations of the method. However, these steps or operations are merely examples. Other operations or variants of various operations in FIG. 8 may be further performed in embodiments of this application. In addition, the steps in FIG. 8 may be separately performed in a sequence different from that shown in FIG. 8, and possibly, not all operations in FIG. 8 need to be performed.

S801: The location management function determines positioning satellites of a terminal device.

In a feasible implementation, the location management function may determine the positioning satellites of the terminal device based on first information. In another feasible implementation, step S801 is an optional step. For example, another device/network element (for example, a serving access network device or an AMF) may determine the positioning satellites of the terminal device based on the first information.

Herein, for understanding of the positioning satellites of the terminal device, refer to related descriptions in the embodiment shown in FIG. 4. Details are not described herein again.

The first information may include ephemeris information and/or coverage information of a satellite.

When the positioning satellites of the terminal device include a serving satellite and at least one neighboring positioning satellite of the terminal device, in a possible scenario, at least two satellites among the positioning satellites of the terminal device have different orbits; and in another possible scenario, all satellites in the positioning satellites have a same orbit. The following separately describes different cases.

Optionally, after determining the positioning satellites of the terminal device, the location management function may send a first message to an access network device corresponding to the positioning satellites. The first message is used to trigger obtaining of uplink positioning information of the terminal device, or the first message is used to request uplink measurement or uplink positioning measurement. Correspondingly, after receiving the first message, the access network device corresponding to the positioning satellites may perform uplink measurement based on the received first message, to obtain the uplink positioning information of the terminal device, and feed back the obtained uplink positioning information of the terminal device to the location management function. Optionally, the location management function may further send a second message to the terminal device, where the second message is used to trigger obtaining of downlink positioning information of the terminal device, or the second message is used to request downlink measurement or downlink positioning measurement. Correspondingly, after receiving the second message, the terminal device may perform downlink measurement based on the received second message, to obtain the downlink positioning information of the terminal device, and feed back the obtained downlink positioning information of the terminal device to the location management function.

Optionally, for understanding of the uplink positioning information and the downlink positioning information, refer to related descriptions in the embodiment shown in FIG. 4. Details are not described herein again.

S802: The location management function determines a location of the terminal device based on the uplink positioning information of the terminal device from the access network device corresponding to the positioning satellites when at least two satellites among the positioning satellites of the terminal device have different orbits.

In a feasible implementation, the terminal device may send capability information to the location management function, and the capability information indicates whether the terminal device supports positioning based on a plurality of satellites. Correspondingly, the location management function may determine, based on the capability information from the terminal device, whether the terminal device supports positioning based on the plurality of satellites.

Optionally, the location management function may determine the location of the terminal device based on the uplink positioning information of the terminal device from the access network device corresponding to the positioning satellites when the location management function determines that at least two satellites among the positioning satellites of the terminal device have different orbits and the terminal device supports positioning based on the plurality of satellites. Optionally, the determining the location of the terminal device based on the uplink positioning information of the terminal device from the access network device corresponding to the positioning satellites may include: determining the location of the terminal device based on the uplink positioning information of the terminal device and the downlink positioning information of the terminal device. Herein, for an implementation of determining the location of the terminal device based on the uplink positioning information or determining the location of the terminal device based on the uplink positioning information and the downlink positioning information, refer to related descriptions in the embodiment shown in FIG. 4. Details are not described herein again.

S803: The location management function determines the location of the terminal device based on information about a neighboring cell of a serving cell of the terminal device and the uplink positioning information of the terminal device from the access network device corresponding to the positioning satellites when all satellites in the positioning satellites have a same orbit.

In a feasible implementation, that the location management function determines the location of the terminal device based on the information about the neighboring cell of the serving cell of the terminal device and the uplink positioning information of the terminal device from the access network device corresponding to the positioning satellites when the positioning satellites include the serving satellite and the at least one neighboring positioning satellite of the terminal device and all satellites in the positioning satellites have a same orbit may be understood as: The location management function determines the location of the terminal device based on the information about the neighboring cell of the serving cell of the terminal device and the uplink positioning information of the terminal device from the access network device corresponding to the positioning satellites when the location management function determines that all satellites in the positioning satellites have a same orbit and the terminal device supports positioning based on the plurality of satellites.

Optionally, the determining the location of the terminal device based on the information about the neighboring cell of the serving cell of the terminal device and the uplink positioning information of the terminal device from the access network device corresponding to the positioning satellites includes: determining the location of the terminal device based on the information about the neighboring cell of the serving cell of the terminal device, the uplink positioning information of the terminal device from the access network device corresponding to the positioning satellites, and the downlink positioning information of the terminal device. For an implementation of determining the location of the terminal device based on the information about the neighboring cell, the uplink positioning information, and the downlink positioning information, refer to related descriptions in the embodiment shown in FIG. 4. Details are not described herein again.

Optionally, the method further includes: when the positioning satellite includes only the serving satellite of the terminal device, and/or the terminal device does not support positioning based on the plurality of satellites, the location management function determines the location of the terminal device based on the information about the neighboring cell of the serving cell of the terminal device and the uplink positioning information of the terminal device from the serving access network device corresponding to the serving satellite.

Optionally, it should be noted that when determining the location of the terminal device, the location management function may further combine the downlink positioning information of the terminal device. This is not limited in this application.

In addition, for details about the information about the neighboring cell of the serving cell of the terminal device, refer to related descriptions in the embodiment shown in FIG. 4. Details are not described again.

Optionally, the following further describes this application with reference to different scenarios shown in FIG. 5A and FIG. 5B.

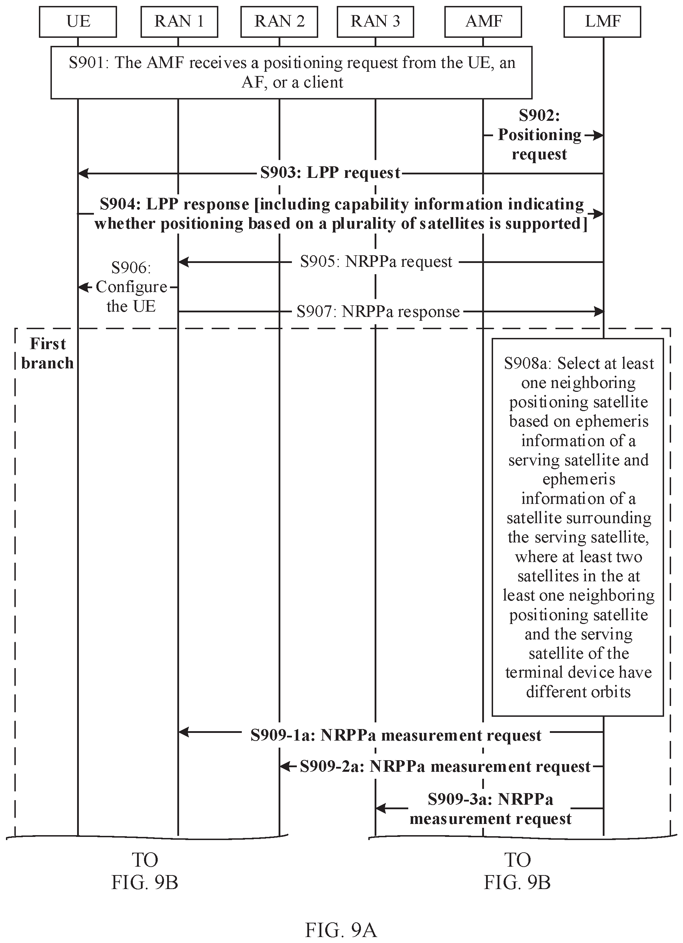

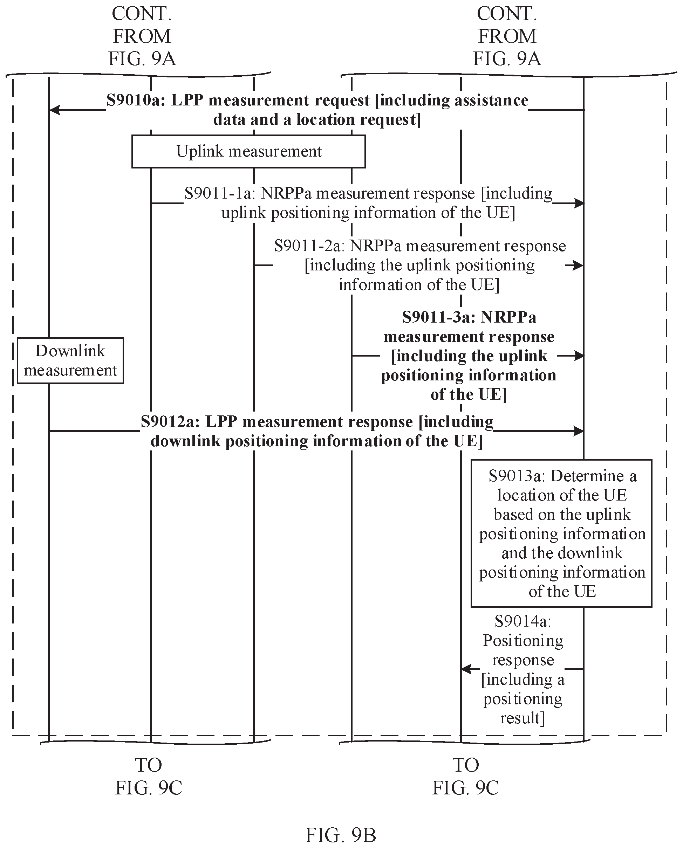

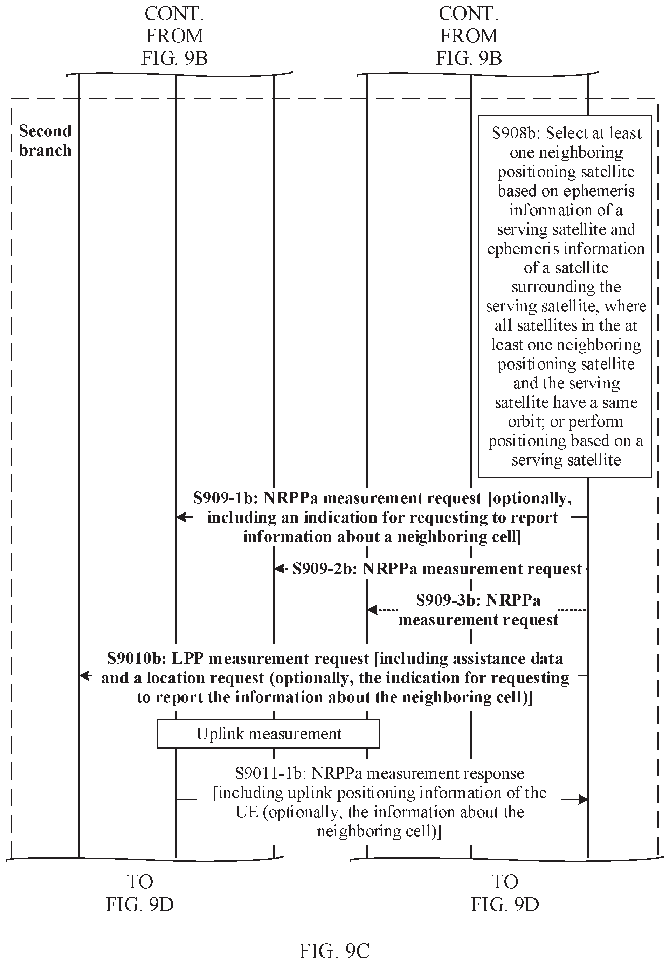

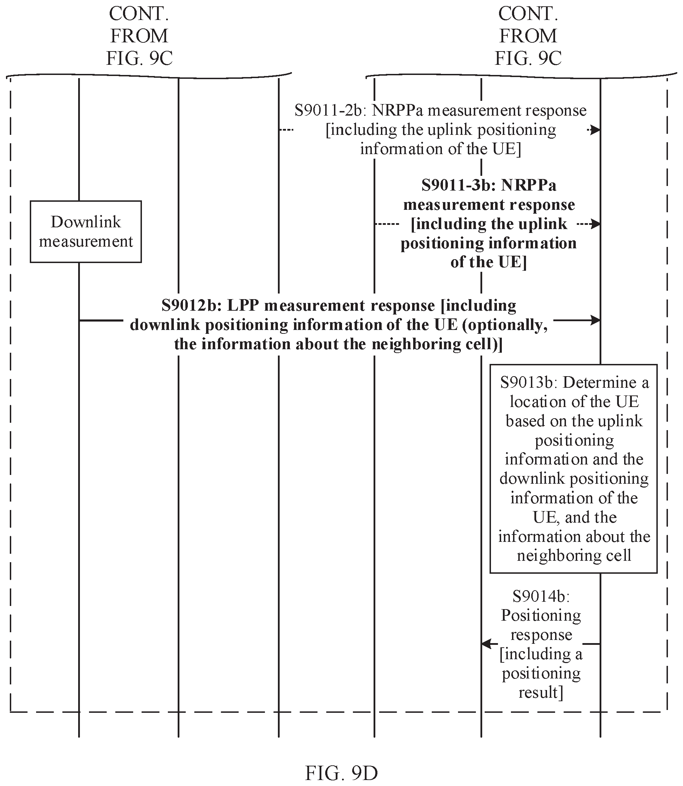

FIG. 9A to FIG. 9D show a solution in which the location management function selects the at least one neighboring positioning satellite. As shown in FIG. 9A to FIG. 9D, a RAN 1 is an access network device (namely, a serving access network device) corresponding to the satellite 1 (namely, a serving satellite), a RAN 2 is an access network device corresponding to the satellite 2, and a RAN 3 is an access network device corresponding to the satellite 3.

S901: UE, an AF, or a client (Client) may send a positioning request to an AMF. Correspondingly, the AMF may receive the positioning request from the UE, the AF, or the client (Client).

Herein, the positioning request is a request for positioning a location of the UE.

S902: The AMF sends a positioning request to an LMF. Correspondingly, the LMF receives the positioning request from the AMF.

In some feasible implementations, the AMF may send the positioning request to the LMF based on the received positioning request. The positioning request sent by the AMF includes information about a serving cell of the UE, for example, an identifier of the serving cell.

Optionally, when the AMF has a requirement for obtaining the location of the UE, the AMF may initiate the positioning request for the UE, and send the positioning request to the LMF. The positioning request carries the information about the serving cell of the UE.

S903: The LMF sends an LPP request to the UE. Correspondingly, the UE receives the LPP request from the LMF.

The LPP request is used to request to obtain a positioning capability/method supported by the UE.

S904: The UE sends an LPP response to the LMF. Correspondingly, the LMF receives the LPP response from the UE.

The LPP response includes capability information indicating whether the UE supports positioning based on a plurality of satellites.

S905: The LMF sends an NRPPa request to the RAN 1. Correspondingly, the RAN 1 receives the NRPPa request from the LMF.

The NRPPa request is used to request UL-SRS configuration information of the UE, for example, request a quantity/duration of UL-SRS transmissions, a bandwidth, a resource type, a requested SRS resource set, a quantity of resources in each SRS resource set, and a carrier frequency of an SRS transmission bandwidth.

S906: The RAN 1 configures the UE.

In some feasible implementations, the RAN 1 may determine, based on the NRPPa request received in S905, a UL-SRS resource set that can be used for the UE, and configure the UL-SRS resource set that can be used for the UE.

S907: The RAN 1 sends an NRPPa response to the LMF. Correspondingly, the LMF receives the NRPPa response from the RAN 1.

In some feasible implementations, after completing configuration of the UE, the RAN may send the NRPPa response to the LMF. The NRPPa response includes the UL-SRS configuration information.

The following separately describes a first branch corresponding to the scenario shown in FIG. 5A and a second branch corresponding to the scenario shown in FIG. 5B.

### First branch:

S908a: The LMF selects at least one neighboring positioning satellite based on ephemeris information of the serving satellite and ephemeris information of a satellite surrounding the serving satellite.

In some feasible implementations, the LMF may determine, based on the ephemeris information of the serving satellite and the ephemeris information of the satellite surrounding the serving satellite that are locally stored, whether two or more satellites including the serving satellite can be used for positioning. If no, positioning is performed based on a single satellite, that is, positioning is performed based on the serving satellite. If yes, the at least one neighboring positioning satellite is selected, where at least two satellites in the at least one neighboring positioning satellite and the serving satellite of the terminal device have different orbits. For example, the orbit of the satellite 2 is different from the orbit of the satellite 3 shown in FIG. 5A. It should be understood that the first branch is mainly described by using a case in which two or more satellites including the serving satellite may be used for positioning, and at least two satellites among the positioning satellites have different orbits.

Optionally, the LMF may alternatively determine, based on the serving satellite and coverage information of the satellite surrounding the serving satellite, whether two or more satellites including the serving satellite can be used for positioning. This is not limited in this application.

S909-1a to S909-3a: The LMF sends an NRPPa measurement request to the RAN 1, the RAN 2, and the RAN 3 respectively. Correspondingly, the RAN 1, the RAN 2, and the RAN 3 receive the NRPPa measurement request from the LMF.

In some feasible implementations, the NRPPa measurement request includes TRP measurement request information including a TRP ID, an NCGI of a TRP that receives a UL-SRS, UE-SRS configuration, a measurement period, measurement quality, response time, and the like.

It may be understood that the RAN 1, the RAN 2, and the RAN 3 may perform uplink measurement based on the received NRPPa measurement request, to obtain uplink positioning information of the UE.

S9010a: The LMF sends an LPP measurement request to the UE. Correspondingly, the UE receives the LPP measurement request from the LMF.

In some feasible implementations, the LPP measurement request includes assistance data and a location request. The assistance data includes data, for example, an NCGI and DL-PRS configuration of candidate TRPs, required by the UE to perform DL-PRS measurement. The location request is used to request the UE to perform downlink measurement.

It may be understood that the UE may perform downlink measurement based on the LPP measurement request, to obtain the downlink positioning information of the UE.

S9011-1a to S9011-3a: The RAN 1, the RAN 2, and the RAN 3 respectively send NRPPa measurement responses to the LMF. Correspondingly, the LMF receives the NRPPa measurement responses from the RAN 1, the RAN 2, and the RAN 3.

The NRPPa measurement response includes the uplink positioning information of the UE.

S9012a: The UE sends an LPP measurement response to the LMF. Correspondingly, the LMF receives the LPP measurement response from the UE.

The LPP measurement response includes the downlink positioning information of the UE.

S9013a: The LMF determines the location of the UE based on the uplink positioning information and the downlink positioning information of the UE.

S9014a: The LMF sends a positioning response to the AMF. Correspondingly, the AMF receives the positioning response from the LMF.

The positioning response includes a positioning result.

### Second branch:

S908b: The LMF selects at least one neighboring positioning satellite based on ephemeris information of the serving satellite and ephemeris information of a satellite surrounding the serving satellite.

In some feasible implementations, the LMF may determine, based on the ephemeris information of the serving satellite and the ephemeris information of the satellite surrounding the serving satellite that are locally stored, whether two or more satellites including the serving satellite can be used for positioning. If no, positioning is performed based on a single satellite, that is, positioning is performed based on the serving satellite. If yes, the at least one neighboring positioning satellite is selected, where all satellites in the at least one neighboring positioning satellite and the serving satellite have a same orbit. For example, as shown in FIG. 5B, the orbit of the satellite 1, the orbit of the satellite 2, and the orbit of the satellite 3 are a same orbit. It should be understood that the second branch is mainly described by using a case in which two or more satellites including a serving satellite may be used for positioning, and all satellites in the positioning satellites have a same orbit.

Optionally, the LMF may alternatively determine, based on the serving satellite and coverage information of the satellite surrounding the serving satellite, whether two or more satellites including the serving satellite can be used for positioning. This is not limited in this application.

Optionally, a mirror problem may occur when positioning is performed based on a single satellite or positioning is performed based on a plurality of satellites with a same orbit. Therefore, the LMF may further determine, based on ephemeris information and beam information of the satellite that are locally stored, whether the mirror problem exists in positioning of the terminal device. Optionally, the ephemeris information and the beam information of the satellite may also come from the RAN 1. This is not limited herein.

S909-1b to S909-3b: The LMF sends an NRPPa measurement request to the RAN 1, the RAN 2, and the RAN 3 respectively. Correspondingly, the RAN 1, the RAN 2, and the RAN 3 receive the NRPPa measurement request from the LMF.

In some feasible implementations, the NRPPa measurement request includes TRP measurement request information including a TRP ID, an NCGI of a TRP that receives a UL-SRS, UE-SRS configuration, a measurement period, measurement quality, response time, and the like.

Optionally, when the mirror problem exists, the NRPPa measurement request sent by the LMF to the RAN 1 may further include an indication for requesting to report the information about the neighboring cell. Therefore, in addition to reporting the uplink positioning information of the UE, the RAN 1 further needs to report the information about the neighboring cell of the serving cell of the UE.

It may be understood that the RAN 1, the RAN 2, and the RAN 3 may perform uplink measurement based on the received NRPPa measurement request, to obtain uplink positioning information of the UE.

S9010b: The LMF sends an LPP measurement request to the UE. Correspondingly, the UE receives the LPP measurement request from the LMF.

In some feasible implementations, the LPP measurement request includes assistance data and a location request. The assistance data includes data, for example, an NCGI and DL-PRS configuration of candidate TRPs, required by the UE to perform DL-PRS measurement. The location request is used to request the UE to perform downlink measurement.

Optionally, when the mirror problem exists, the LPP measurement request sent by the LMF to the UE may further include an indication for requesting to report the information about the neighboring cell. Therefore, in addition to reporting the downlink positioning information of the UE, the UE further needs to report the information about the neighboring cell of the serving cell of the UE.

It may be understood that the UE may perform downlink measurement based on the LPP measurement request, to obtain the downlink positioning information of the UE.

S9011-1b to S9011-3b: The RAN 1, the RAN 2, and the RAN 3 respectively send NRPPa measurement responses to the LMF. Correspondingly, the LMF receives the NRPPa measurement responses from the RAN 1, the RAN 2, and the RAN 3.

The NRPPa measurement response includes the uplink positioning information of the UE. Optionally, the NRPPa measurement response fed back by the RAN 1 may further include the information about the neighboring cell.

S9012b: The UE sends an LPP measurement response to the LMF. Correspondingly, the LMF receives the LPP measurement response from the UE.

The LPP measurement response includes the downlink positioning information of the UE. Optionally, the LPP measurement response may further include the information about the neighboring cell.

S9013b: The LMF determines the location of the UE based on the uplink positioning information and the downlink positioning information of the UE, and the information about the neighboring cell.

S9014b: The LMF sends a positioning response to the AMF. Correspondingly, the AMF receives the positioning response from the LMF.

The positioning response includes a positioning result.

It should be noted that in this embodiment, the location management function may select the at least one neighboring positioning satellite, and trigger obtaining of the uplink positioning information of the terminal device from access network devices corresponding to the plurality of positioning satellites including the serving satellite and the at least one neighboring positioning satellite, to determine the location of the terminal device. This helps improve positioning efficiency, that is, reduce a positioning delay. In addition, if at least two satellites in the serving satellite and the at least one neighboring positioning satellite have different orbits, the mirroring problem can be avoided, to help improve positioning accuracy. If all satellites in the serving satellite and the at least one neighboring positioning satellite have a same orbit, the location management function may further determine the location of the terminal device based on the information about the neighboring cell of the serving cell of the terminal device, to resolve inaccurate positioning caused by the mirroring problem.

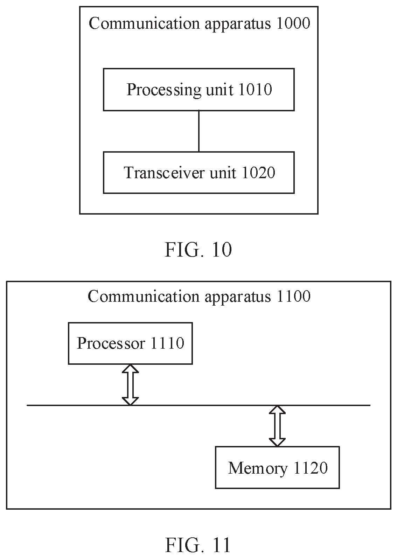

The following describes in detail communication apparatuses provided in this application with reference to FIG. 10 and FIG. 11.

It can be understood that, to implement functions in the foregoing embodiments, the communication apparatus includes corresponding hardware structures and/or software modules for performing the functions. A person skilled in the art should be easily aware that, in this application, the units and method steps in the examples described according to embodiments disclosed in this application can be implemented by hardware or a combination of hardware and computer software. Whether a function is performed by hardware or hardware driven by computer software depends on particular application scenarios and design constraint conditions of the technical solutions.

FIG. 10 and FIG. 11 each are a diagram of a possible structure of a communication apparatus according to an embodiment of this application. The communication apparatuses may be configured to implement a function of the network device in the foregoing method embodiment. Therefore, beneficial effects of the foregoing method embodiments can also be achieved. In embodiments of this application, the communication apparatus may be a network device, or may be a module (for example, a chip) used in the network device. For example, the network device may be a location management function, a serving access network device, or an access and mobility management function.

As shown in FIG. 10, a communication apparatus 1000 includes a processing unit 1010 and a transceiver unit 1020. The communication apparatus 1000 is configured to implement the functions of the network device in the method embodiments shown in FIG. 4 to FIG. 9A to FIG. 9D.

When the communication apparatus 1000 is configured to implement the functions of the location management functions in the method embodiments shown in FIG. 4 to FIG. 9A to FIG. 9D, in an implementation, the transceiver unit 1020 is configured to receive uplink positioning information of a terminal device from an access network device corresponding to positioning satellites of the terminal device, where the positioning satellites include a serving satellite and at least one neighboring positioning satellite of the terminal device, and the neighboring positioning satellite is a neighboring satellite of the serving satellite.

The processing unit 1010 is configured to determine a location of the terminal device based on the uplink positioning information of the terminal device.

In another implementation, the processing unit 1010 is configured to: determine a location of a terminal device based on uplink positioning information of the terminal device from an access network device corresponding to positioning satellites when at least two satellites among the positioning satellites of the terminal device have different orbits; and/or
the processing unit 1010 is configured to determine the location of the terminal device based on information about a neighboring cell of a serving cell of the terminal device and the uplink positioning information of the terminal device from the access network device corresponding to the positioning satellites when all satellites in the positioning satellites have a same orbit.

The positioning satellites include a serving satellite and at least one neighboring positioning satellite of the terminal device, and the neighboring positioning satellite is a neighboring satellite of the serving satellite.

When the communication apparatus 1000 is configured to implement the function of the serving access network device or the access and mobility management function in the method embodiments shown in FIG. 4 to FIG. 9A to FIG. 9D, the processing unit 1010 is configured to obtain information about an access network device corresponding to at least one neighboring positioning satellite of a terminal device, where the neighboring positioning satellite is a neighboring satellite of a serving satellite of the terminal device.

The transceiver unit 1020 is configured to send, to a location management function, the information about the access network device corresponding to the at least one neighboring positioning satellite.

For more detailed descriptions of the processing unit 1010 and the transceiver unit 1020, refer to related descriptions in the method embodiments shown in FIG. 4 to FIG. 9A to FIG. 9D.

As shown in FIG. 11, a communication apparatus 1100 includes a processor 1110 and a memory 1120. The processor 1110 is configured to execute instructions in the memory 1120, to implement the functions of the network device in the foregoing method embodiments.

The network device may be a location management function, a serving access network device, or an access and mobility management function.

The communication apparatus may be the foregoing network device, or may be a chip used in the network device. The communication apparatus is configured to implement the functions of the network device in the foregoing method embodiments.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

This application further provides a communication system. The communication system includes a location management function and a serving access network device, and may further include an access and mobility management function, and the like. The location management function is used to implement the functions of the location management function in the foregoing method embodiments, the serving access network device is used to implement the functions of the serving access network device in the foregoing method embodiments, and the access and mobility management function is used to implement the functions of the access and mobility management function in the foregoing method embodiments.

This application further provides a computer-readable storage medium. The computer-readable storage medium stores a computer program or instructions. When the computer program or the instructions are executed by a location management function, the functions of the location management function in the foregoing method embodiments are implemented. When the computer program or the instructions are executed by a serving access network device, the functions of the serving access network device in the foregoing method embodiments are implemented. When the computer program or the instructions are executed by an access and mobility management function, the functions of the access and mobility management function in the foregoing method embodiments are implemented.

This application further provides a computer program product. The computer program product includes computer program code. When the computer program code is run on a location management function, the functions of the location management function in the foregoing method embodiments are implemented; or when the computer program code is run on a serving access network device, the functions of the serving access network device in the foregoing method embodiments are implemented; or when the computer program code is run on an access and mobility management function, the functions of the access and mobility management function in the foregoing method embodiments are implemented.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a network device. The processor and the storage medium may alternatively exist in a network device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a location management function, wherein the method comprises:
receiving uplink positioning information of a terminal device from an access network device corresponding to positioning satellites of the terminal device, wherein the positioning satellites comprise a serving satellite and at least one neighboring positioning satellite of the terminal device, and the neighboring positioning satellite is a neighboring satellite of the serving satellite; and
determining a location of the terminal device based on the uplink positioning information of the terminal device.

2. The method according to claim 1, wherein the method further comprises:
receiving information about an access network device corresponding to the at least one neighboring positioning satellite from a serving access network device corresponding to the serving satellite or from an access and mobility management function; and
sending, based on the information about the access network device corresponding to the at least one neighboring positioning satellite, a first message to the access network device corresponding to the at least one neighboring positioning satellite and the serving access network device, wherein the first message is used to trigger obtaining of the uplink positioning information of the terminal device.

3. The method according to claim 1 or 2, wherein the method further comprises:
receiving capability information from the terminal device, wherein the capability information indicates whether the terminal device supports positioning based on a plurality of satellites.

4. The method according to any one of claims 1 to 3, wherein the determining the location of the terminal device based on the uplink positioning information of the terminal device comprises:
when the terminal device supports positioning based on the plurality of satellites, determining the location of the terminal device based on the uplink positioning information of the terminal device.

5. The method according to any one of claims 1 to 4, wherein at least two satellites among the positioning satellites have different orbits.

6. The method according to any one of claims 1 to 4, wherein all satellites in the positioning satellites have a same orbit.

7. The method according to claim 6, wherein the determining the location of the terminal device based on the uplink positioning information of the terminal device comprises:
determining the location of the terminal device based on information about a neighboring cell of a serving cell of the terminal device and the uplink positioning information of the terminal device.

8. The method according to any one of claims 1 to 7, wherein the method further comprises:
when the terminal device does not support positioning based on the plurality of satellites, determining the location of the terminal device based on the information about the neighboring cell of the serving cell of the terminal device and the uplink positioning information of the terminal device from the serving access network device corresponding to the serving satellite.

9. The method according to claim 7 or 8, wherein the method further comprises:
obtaining information about the neighboring cell when determining, based on ephemeris information and beam information of the satellite, that a mirror problem exists in positioning of the terminal device; or
receiving first indication information from the serving access network device corresponding to the serving satellite, and obtaining the information about the neighboring cell based on the first indication information, wherein the first indication information indicates that a mirror problem exists in positioning of the terminal device.

10. The method according to claim 9, wherein the obtaining the information about the neighboring cell comprises:
requesting the information about the neighboring cell from the serving access network device, and receiving the information about the neighboring cell from the serving access network device; or
requesting the information about the neighboring cell from the terminal device, and receiving the information about the neighboring cell from the terminal device.

11. The method according to claim 7 or 8, wherein the method further comprises:
receiving the information about the neighboring cell from the serving access network device corresponding to the serving satellite; or
receiving the information about the neighboring cell from the terminal device.

12. The method according to any one of claims 7 to 11, wherein the information about the neighboring cell comprises one or more of the following information:
an identifier of the neighboring cell, information about a reference signal of the neighboring cell, or information about a beam of the neighboring cell.

13. A communication method, applied to a location management function, wherein the method comprises:
determining a location of a terminal device based on uplink positioning information of the terminal device from an access network device corresponding to positioning satellites when at least two satellites among the positioning satellites of the terminal device have different orbits; and/or
determining the location of the terminal device based on information about a neighboring cell of a serving cell of the terminal device and the uplink positioning information of the terminal device from the access network device corresponding to the positioning satellites when all satellites in the positioning satellites have a same orbit, wherein
the positioning satellites comprise a serving satellite and at least one neighboring positioning satellite of the terminal device, and the neighboring positioning satellite is a neighboring satellite of the serving satellite.

14. The method according to claim 13, wherein the method further comprises:
receiving capability information from the terminal device, wherein the capability information indicates whether the terminal device supports positioning based on a plurality of satellites.

15. The method according to claim 13 or 14, wherein the determining the location of the terminal device based on the uplink positioning information of the terminal device from the access network device corresponding to the positioning satellites when at least two satellites among the positioning satellites of the terminal device have different orbits comprises:
determining the location of the terminal device based on the uplink positioning information of the terminal device from the access network device corresponding to the positioning satellites when at least two satellites among the positioning satellites of the terminal device have different orbits and the terminal device supports positioning based on the plurality of satellites.

16. The method according to any one of claims 13 to 15, wherein the determining the location of the terminal device based on the uplink positioning information of the terminal device from the access network device corresponding to the positioning satellites comprises:
determining the location of the terminal device based on the uplink positioning information of the terminal device and downlink positioning information of the terminal device.

17. The method according to any one of claims 13 to 16, wherein the method further comprises:
when the terminal device does not support positioning based on the plurality of satellites, determining the location of the terminal device based on the information about the neighboring cell of the serving cell of the terminal device and the uplink positioning information of the terminal device from the serving access network device corresponding to the serving satellite.

18. The method according to any one of claims 13 to 17, wherein the method further comprises:
determining the positioning satellites of the terminal device based on first information, wherein the first information comprises ephemeris information and/or coverage information of the satellite.

19. The method according to any one of claims 13 to 18, wherein the method further comprises:
receiving the uplink positioning information of the terminal device from the access network device corresponding to the positioning satellites.

20. The method according to claim 19, wherein the method further comprises:
sending a second message to the access network device corresponding to the positioning satellites, wherein the second message is used to trigger obtaining of the uplink positioning information of the terminal device.

21. The method according to any one of claims 13 to 20, wherein the method further comprises:
obtaining the information about the neighboring cell when determining, based on the ephemeris information and beam information of the satellite, that a mirror problem exists in positioning of the terminal device; or
receiving first indication information from the serving access network device corresponding to the serving satellite, and obtaining the information about the neighboring cell based on the first indication information, wherein the first indication information indicates that a mirror problem exists in positioning of the terminal device.

22. The method according to claim 21, wherein the obtaining the information about the neighboring cell comprises:
requesting the information about the neighboring cell from the serving access network device, and receiving the information about the neighboring cell from the serving access network device; or
requesting the information about the neighboring cell from the terminal device, and receiving the information about the neighboring cell from the terminal device.

23. The method according to any one of claims 13 to 20, wherein the method further comprises:
receiving the information about the neighboring cell from the serving access network device corresponding to the serving satellite; or
receiving the information about the neighboring cell from the terminal device.

24. The method according to any one of claims 13 to 23, wherein the information about the neighboring cell comprises one or more of the following information:
an identifier of the neighboring cell, information about a reference signal of the neighboring cell, or information about a beam of the neighboring cell.

25. A communication method, applied to a first network device, wherein the method comprises:
obtaining information about an access network device corresponding to at least one neighboring positioning satellite of a terminal device, wherein the neighboring positioning satellite is a neighboring satellite of a serving satellite of the terminal device; and
sending, to a location management function, the information about the access network device corresponding to the at least one neighboring positioning satellite.

26. The method according to claim 25, wherein the method further comprises:
determining a positioning satellites of the terminal device based on first information, wherein the first information comprises ephemeris information and/or coverage information of the satellite.

27. The method according to claim 25 or 26, wherein at least two satellites in the at least one neighboring positioning satellite and the serving satellite of the terminal device have different orbits.

28. The method according to claim 25 or 26, wherein all satellites in the at least one neighboring positioning satellite and the serving satellite have a same orbit.

29. The method according to claim 28, wherein the first network device is a serving access network device corresponding to the serving satellite, and the method further comprises:
when determining, based on the ephemeris information and beam information of the satellite, that a mirror problem exists in positioning of the terminal device, sending information about a neighboring cell of a serving cell of the terminal device or first indication information to the location management function, wherein the first indication information indicates that the mirror problem exists in positioning of the terminal device.

30. The method according to any one of claims 25 to 29, wherein the first network device is the serving access network device corresponding to the serving satellite, and the method further comprises:
receiving, from the location management function, a request message for requesting information about the neighboring cell; and
sending the information about the neighboring cell of the serving cell of the terminal device to the location management function based on the request message.

31. The method according to claim 29 or 30, wherein the information about the neighboring cell comprises one or more of the following information:
an identifier of the neighboring cell, information about a reference signal of the neighboring cell, or information about a beam of the neighboring cell.

32. The method according to any one of claims 25 to 31, wherein the first network device is the serving access network device corresponding to the serving satellite, and the method further comprises:
receiving a first message from the location management function, wherein the first message is used to trigger obtaining of uplink positioning information of the terminal device;
obtaining the uplink positioning information of the terminal device based on the first message; and
sending the uplink positioning information of the terminal device to the location management function.

33. A communication apparatus, comprising a unit or a module configured to perform the method according to any one of claims 1 to 12, or comprising a unit or a module configured to perform the method according to any one of claims 13 to 24, or comprising a unit or a module configured to perform the method according to any one of claims 25 to 32.

34. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus; and the processor is configured to implement the method according to any one of claims 1 to 12, or the method according to any one of claims 13 to 24, or the method according to any one of claims 25 to 32 by using a logic circuit or by executing code instructions.

35. A computer-readable storage medium, wherein the storage medium stores a computer program or instructions, and when the computer program or the instructions are executed by a communication apparatus, the method according to any one of claims 1 to 12 is implemented, or the method according to any one of claims 13 to 24 is implemented, or the method according to any one of claims 25 to 32 is implemented.

36. A computer program product, comprising computer program code, wherein when the computer program code is run on a computer, the method according to any one of claims 1 to 12 is implemented, or the method according to any one of claims 13 to 24 is implemented, or the method according to any one of claims 25 to 32 is implemented.

37. A communication system, comprising a location management function and a first network device, wherein the location management function is used to implement the method according to any one of claims 1 to 12, or implement the method according to any one of claims 13 to 24, and the first network device is configured to implement the method according to any one of claims 25 to 32.
